# EUROPÄISCHE PATENTSCHRIFT

(11) **EP 3 375 646 B1**
(45) Veröffentlichungstag und Bekanntmachung des Hinweises auf die Patenterteilung: **26.06.2024**
(21) Anmeldenummer: 17160483.8
(22) Anmeldetag: 13.03.2017
(51) Int. Cl.: B60C 23/00, B60C 23/04

(54) **ERMÖGLICHEN EINER ZUORDNUNG EINES REIFENSENSORS ZU EINER RADPOSITION**
ABILITY TO ASSOCIATE A TYRE SENSOR TO A TYRE POSITION
PERMETTRE D'ASSOCIER UN CAPTEUR DE PNEU À UNE POSITION DE ROUE

(43) Veröffentlichungstag der Anmeldung: 19.09.2018
(73) Patentinhaber: Schmitz Cargobull AG, 48341 Altenberge (DE)
(72) Erfinder: Klütz, Karsten, 46395 Bocholt (DE)
(74) Vertreter: Cohausz & Florack

(56) Entgegenhaltungen:
- EP-A1- 1 616 722
- DE-A1-102011 055 886
- US-A1- 2005 187 667
- US-A1- 2008 094 197
- US-A1- 2009 096 599

## Beschreibung

### Gebiet

Beispielhafte Ausführungsformen der Erfindung betreffen unter anderem das Ermöglichen einer Zuordnung eines Reifensensors zu einer Radposition.

### Hintergrund

Im Stand der Technik sind Telematikeinheiten für Nutzfahrzeuge bekannt, mit denen Zustandsinformationen des Nutzfahrzeugs erfasst und beispielsweise über ein Mobilfunknetzwerk an einen entfernten Server eines Telematikdienstes kommuniziert werden können. Über eine von dem Server bereitgestellte Benutzeroberfläche kann auf die Zustandsinformationen zugegriffen und beispielsweise der Zustand des Nutzfahrzeugs, die Route des Nutzfahrzeugs und/oder die Umgebungsparameter der von dem Nutzfahrzeug transportierten Gütern überwacht werden. Ein Beispiel für solche Zustandsinformationen sind Reifenzustandsinformationen, die auf Reifenparameterwerten basieren, die durch Reifensensoren erfasst werden. Dabei sind die Reifensensoren und die von den Reifensensoren erfassten Reifenparameterwerte jeweils einer Radposition des Nutzfahrzeugs fest zugeordnet.

Diese Zuordnung muss bei jedem Reifenwechsel und dem damit verbundenen Wechsel der Reifensensoren entsprechend angepasst werden, um beispielsweise eine fehlerfreie Überwachung der Reifen anhand der Reifenzustandsinformationen zu gewährleisten. Diese Anpassung ist aufwändig und häufig nicht ohne Hilfsmittel wie beispielsweise eine zusätzliche Benutzervorrichtung möglich, so dass eine Anpassung häufig unterbleibt, so dass eine fehlerfreie Überwachung der Reifen anhand der Reifenzustandsinformationen nicht möglich ist.

Aus dem Dokument US 2009/0096599 A1 sind Systeme, Verfahren und Vorrichtungen zum Überwachen des Zustands von Sensoren bekannt, die die Parameter einer oder mehrerer Fahrzeugkomponenten erfassen. Ein Überwachungsgerät in einem ersten Fahrzeug empfängt RF-Signale von Sensoren, die sich entfernt von dem Überwachungsgerät befinden. Die Sensoren können anderen Fahrzeugen als dem ersten Fahrzeug zugeordnet sein, und es ist wünschenswert, nur die Sensoren zu überwachen, die auch dem ersten Fahrzeug zugeordnet sind. Sensoren können zur Überwachung ausgewählt werden, indem eine Vielzahl von verschiedenen Sensoren gelesen und ein oder mehrere Sensoren aus der Vielzahl von Sensoren ausgewählt werden, die dem ersten Fahrzeug zugeordnet sind und somit überwacht werden sollen. Sensoren, die überwacht werden sollen, werden basierend auf einem vorgegebenen Kriterium ausgewählt, nachdem bestimmt wurde, dass das erste Fahrzeug in Bewegung ist. Das Überwachungsgerät beinhaltet einen Bewegungssensor, der in der Lage ist zu bestimmen, ob das Fahrzeug in Bewegung ist. Aus dem Dokument EP 1 616 722 A1 ist ein Verfahren zur Positionserkennung von Radmodulen an einem Kraftfahrzeug bekannt, wobei die Radmodule physikalische Zustandsgrößen an den Rädern erfassen und diese um eine Modulidentifikation ergänzt an eine fahrzeugbasierte Empfangs- und Verarbeitungseinrichtung signalisieren, an der aus einer Drehrichtung der Räder und/oder einer Funkfeldstärke der Signale eine Zuordnung einzelner Module zu rechten bzw. linken Rädern des Kraftfahrzeugs vorgenommen wird. Eine Zuordnung einzelner Radmodule zu vorderen Rädern bzw. hinteren Rädern des Kraftfahrzeugs erfolgt auf Basis modulweise erfasster Temperaturen.

Aus dem Dokument DE 10 2011 055 886 A1 ist die Aufgabe bekannt, ein Reifenzustandsüberwachungssystem und ein Montagepositionsermittlungsverfahren bereitzustellen, das zwischen einem Innenrad und einem Außenrad eines an einem Nutzfahrzeug verwendeten Zwillingsrads unterscheiden kann. Das System ist ausgestaltet, eine Zahl der Zwillingsräder zu speichern, die zwei Reifen aufweisen, die eng zueinander benachbart sind, innere Lufttemperaturen der Reifen aller Räder zu messen, und die gemessenen Temperaturen, wenn ein Systemreset ausgeführt wird, als Bezugstemperaturen zu speichern. Danach summiert das System die für jeden Reifen gemessenen Temperaturen, bis eine gemessene Temperatur die entsprechende Bezugstemperatur um 20 Grad oder mehr überschreitet. Das System ordnet dann die Summenwerte der gemessenen Temperaturen in einer Reihenfolge an und stellt fest, dass eine Zahl der Summenwerte, die in der Reihenfolge am höchsten sind, Summenwerte der Temperaturen der Reifen sind, die am Innenrad eines Zwillingsrads montiert sind. Die Zahl der Summenwerte, von denen bestimmt worden ist, dass sie einem Zwillingsrad entsprechen, ist zur Zahl der Zwillingsräder des Fahrzeugs äquivalent. Auf diese Weise stellt das System fest, welche Reifen an einem Innenrad eines Zwillingsrads montiert sind.

Ein weiteres Verfahren zur Positionserkennung von Radmodulen ist aus der US20050187667 A1 bekannt,

### Zusammenfassung einiger beispielhafter Ausführungsformen der Erfindung

Die vorliegende Erfindung hat sich daher unter anderem die Aufgabe gestellt, diese Probleme zu überwinden. Diese Aufgabe wird von den Ausführungsformen gemäß den unabhängigen Ansprüchen gelöst. Die abhängigen Ansprüche offenbaren weitere Ausführungsformen.

Gemäß der Erfindung wird ein Verfahren mit den Merkmalen des Anspruchs 1 offenbart.

Das Verfahren ist beispielsweise ein Verfahren zum Ermöglichen einer Zuordnung, insbesondere einer automatischen Zuordnung, eines Reifensensors zu einer Radposition.

Das Verfahren wird beispielsweise durch eine Vorrichtung (z.B. der unten offenbarten erfindungsgemäßen Vorrichtung und/oder einer Telematikeinheit des Nutzfahrzeugs) und/oder durch Mittel einer Vorrichtung (z.B. der unten offenbarten erfindungsgemäßen Vorrichtung und/oder einer Telematikeinheit des Nutzfahrzeugs) ausgeführt.

Gemäß der Erfindung wird ferner eine Vorrichtung offenbart, wobei die Vorrichtung eingerichtet ist zur Ausführung und/oder Steuerung des erfindungsgemäßen Verfahrens oder jeweilige Mittel zur Ausführung und/oder Steuerung der Schritte des erfindungsgemäßen Verfahrens umfasst.

Die Vorrichtung ist beispielsweise eine Vorrichtung zum Ermöglichen einer Zuordnung, insbesondere einer automatischen Zuordnung, eines Reifensensors zu einer Radposition.

Die Mittel können beispielsweise mindestens einen Speicher mit Programmanweisungen eines Computerprogramms (z.B. des unten offenbarten erfindungsgemäßen Computerprogramms) und mindestens einen Prozessor ausgebildet zum Ausführen von Programmanweisungen aus dem mindestens einen Speicher umfassen. Dementsprechend soll gemäß der Erfindung auch eine Vorrichtung offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das erfindungsgemäße Verfahren auszuführen und/oder zu steuern.

Alternativ oder zusätzlich können die Mittel ferner eine oder mehrere drahtlose Kommunikationsmittel (z.B. einen oder mehrere drahtlose Kommunikationsschnittstellen) und/oder eine oder mehrere Ein- und/oder Ausgabemittel (z.B. eine oder mehrere Benutzerschnittstellen wie eine Tastatur, eine Maus, ein Touchpad, einen Bildschirm, einen berührungsempfindlichen Bildschirm, einen Lautsprecher, ein Mikrofon, usw.) umfassen. Es versteht sich, dass die Vorrichtung auch andere nicht aufgeführte Mittel umfassen kann.

Die erfindungsgemäße Vorrichtung ist vorzugsweise eine Telematikeinheit für ein Nutzfahrzeug. Eine Telematikeinheit für ein Nutzfahrzeug ist beispielsweise eingerichtet zum Erfassen von Zustandsinformationen des Nutzfahrzeugs. Beispiele solcher Zustandsinformationen sind: Tankfüllstandinformationen, Reifeninformationen (z.B. Reifendruckwerte und/oder Reifentemperaturwerte), Feuchtigkeitsinformationen, Temperaturinformationen, Türöffnungs- und - schließinformationen und/oder Positionsinformationen. Zum Beispiel kann die Telematikeinheit diese Zustandsinformationen durch entsprechende Sensoren erfassen und/oder von entsprechenden Sensoren empfangen. Ferner ist die Telematikeinheit eines Nutzfahrzeugs beispielsweise eingerichtet zum Senden der erfassten Zustandsinformationen an einen Server eines Telematiksystems und/oder eines Telematikdienstes. Der Server stellt beispielsweise eine Benutzeroberfläche zum Zugriff auf die Zustandsinformationen über das Internet bereit.

Gemäß der Erfindung wird ferner ein Computerprogramm offenbart, wobei das Computerprogramm Programmanweisungen umfasst, die dazu ausgebildet sind, bei Ausführung durch mindestens einen Prozessor, eine Vorrichtung (z.B. die erfindungsgemäße Vorrichtung und/oder eine Telematikeinheit für ein Nutzfahrzeug) zu veranlassen, das erfindungsgemäße Verfahren auszuführen.

Das Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Gemäß der Erfindung wird ferner ein Nutzfahrzeug offenbart, wobei das Nutzfahrzeug umfasst:
- eine erfindungsgemäße Vorrichtung, und
- einen oder mehrere Reifensensoren.

Im Folgenden werden die Eigenschaften des erfindungsgemäßen Verfahrens, der erfindungsgemäßen Vorrichtung, des erfindungsgemäßen Computerprogramms und des erfindungsgemäßen Nutzfahrzeugs - teilweise beispielhaft - beschrieben.

Unter einem drahtlosen Kommunikationssignal wie dem ersten drahtlosen Kommunikationssignal soll beispielsweise ein Funksignal verstanden, zum Beispiel ein Funksignal mit einer Trägerfrequenz im ISM (Industrial, Scientific und Medical)-Band (z.B. ein Funksignal mit einer Trägerfrequenz von 315 Mhz, 433 Mhz oder 434 MHz). Ein drahtloses Kommunikationssignal wie das erste drahtlose Kommunikationssignal kann beispielsweise durch ein Modulationsverfahren (z.B. Amplitudenmodulation, Amplitude Shift Keying oder Frequency Shift Keying) erhalten werden, bei dem ein Nutzsignal (z.B. ein analoges oder digitales Nutzsignal) ein sogenanntes Trägersignal verändert.

Dass ein Kommunikationssignal (z.B. das erste Kommunikationssignal) eine Repräsentation eines Werts (z.B. einen Reifenparameterwert) und/oder einer Information (z.B. eine Kennung) enthält, soll dementsprechend beispielsweise derart verstanden werden, dass das Nutzsignal oder ein Teil des Nutzsignals den Wert und/oder die Information repräsentiert.

Unter dem Empfangen eines drahtlosen Kommunikationssignals soll beispielsweise verstanden werden, dass das drahtlose Kommunikationssignal derart empfangen wird, dass es weiterverarbeitbar ist und/oder ein darin enthaltenes Nutzsignal aus dem empfangenen drahtlosen Kommunikationssignal erhalten (z.B. extrahiert) werden kann (z.B. durch ein Demodulationsverfahren).

Zum Beispiel sind die drahtlosen Kommunikationsmittel des Nutzfahrzeugs eingerichtet zum Empfangen eines drahtlosen Kommunikationssignals eines Reifensensors (z.B. des ersten drahtlosen Kommunikationssignals des ersten Reifensensors) und zum Erhalten (z.B. zum Extrahieren) eines zu übertragenden Nutzsignals aus dem empfangenen drahtlosen Kommunikationssignal (z.B. durch einen Demodulator der drahtlosen Kommunikationsmittel).

Die Kommunikationsmittel des Nutzfahrzeugs sind beispielsweise Kommunikationsmittel einer in und/oder an dem Nutzfahrzeug angeordneten Vorrichtung wie der erfindungsgemäßen Vorrichtung (z.B. einer Telematikeinheit für ein Nutzfahrzeug). Die Kommunikationsmittel des Nutzfahrzeugs umfassen beispielsweise eine Antenne und/oder eine Empfangsschaltung. Teil einer Empfangsschaltung sind beispielsweise ein oder mehrere Mischer, ein oder mehrere Verstärker und/oder ein oder mehrere Demodulatoren. Die Empfangsschaltung ist beispielsweise Teil einer Sende-Empfangsschaltung.

Ein Nutzfahrzeug ist zum Beispiel ein Lastkraftwagen, ein Anhänger oder ein Sattelauflieger. Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern.

Unter einer Radposition des Nutzfahrzeugs soll beispielsweise eine Montageposition zur Montage eines Rads an dem Nutzfahrzeug wie eine Radnabe verstanden werden. Ein Nutzfahrzeug weist beispielsweise zumindest zwei verschiedene Radpositionen auf.

Der erste Reifensensor ist beispielsweise an und/oder in einem Reifen des Nutzfahrzeugs angeordnet. Dabei soll unter einem Reifen des Nutzfahrzeugs beispielsweise ein Reifen eines an dem Nutzfahrzeug montierten Rads verstanden werden. Der Reifen ist zum Beispiel ein Nutzfahrzeug- und/oder LKW-Reifen, beispielsweise ein Pneureifen (d.h. ein mit Luft und/oder einem Gas gefüllter Reifen, z.B. ein Luftreifen). Beispielsweise kann der Reifensensor Teil eines Ventils eines Pneureifens sein und/oder an einem Ventil eines Pneureifens angeordnet sein.

Zum Beispiel ist der erste Reifensensor eingerichtet, zumindest einen Reifenparameterwert eines Reifenparameters wie beispielsweise einen Reifendruck (z.B. einen Druck im Inneren eines Pneureifens) und/oder eine Reifentemperatur (z.B. eine Temperatur im Inneren eines Pneureifens) zu erfassen (z.B. kontinuierlich oder in regelmäßigen oder unregelmäßigen Zeitabständen zu erfassen). Zum Beispiel umfasst der erste Reifensensor Mittel zum Erfassen zumindest eines Reifenparameterwerts eines Reifenparameters wie einen Drucksensor und/oder einen Temperatursensor. Ferner ist der erste Reifensensor beispielsweise eingerichtet, das erste drahtlose Kommunikationssignal auszusenden (z.B. in regelmäßigen oder unregelmäßigen Zeitabständen mit einer Repräsentation des jeweils zuletzt erfassten zumindest einen Reifenparameterwerts auszusenden). Zum Beispiel umfasst der Reifensensor Kommunikationsmittel zum Aussenden des ersten drahtlosen Kommunikationssignals wie eine Sendeschaltung und/oder eine Antenne. Teil einer Sendeschaltung sind beispielsweise ein oder mehrere Mischer, ein oder mehrere Verstärker und/oder ein oder mehrere Modulatoren. Die Sendeschaltung ist beispielsweise Teil einer Sende-Empfangsschaltung.

Es versteht sich, dass das Nutzfahrzeug neben einem Reifen mit dem ersten Reifensensor noch weitere Reifen mit weiteren Reifensensoren aufweisen kann.

Das Bestimmen, ob der erste Reifensensor einer Radposition des Nutzfahrzeugs zuordenbar ist, erfolgt beispielsweise gemäß vorgegebenen Regeln und/oder einem vorgegebenen Algorithmus. Eine Repräsentation der Regeln und/oder des Algorithmus kann beispielsweise in einem Speicher der erfindungsgemäßen Vorrichtung gespeichert sein, zum Beispiel in Form von Programmanweisungen eines Computerprogramms.

Zum Beispiel ergibt das Bestimmen, dass der erste Reifensensor einer Radposition des Nutzfahrzeugs zuordenbar ist, falls die vorgegebenen Regeln und/oder der vorgegebene Algorithmus den ersten Reifensensor einer Radposition des Nutzfahrzeugs zuordnen. Andernfalls ergibt das Bestimmen beispielsweise, dass der erste Reifensensor keiner Radposition des Nutzfahrzeugs zuordenbar ist.

Zum Beispiel ordnen die vorgegebenen Regeln den ersten Reifensensor zumindest teilweise basierend auf dem Empfangsparameterwert des ersten drahtlosen Kommunikationssignals und/oder der in dem ersten drahtlosen Kommunikationssignal enthaltene Repräsentation eines Reifenparameterwerts einer Radposition zu.

Zum Beispiel enthält der vorgegebene Algorithmus Vorschriften zum Bestimmen einer Zuordnung des ersten Reifensensors zu einer Radposition zumindest teilweise basierend auf dem Empfangsparameterwert des ersten drahtlosen Kommunikationssignals und/oder der in dem ersten drahtlosen Kommunikationssignal enthaltene Repräsentation eines Reifenparameterwerts, beispielsweise erhält der Algorithmus den Empfangsparameterwert des ersten drahtlosen Kommunikationssignals und/oder die in dem ersten drahtlosen Kommunikationssignal enthaltene Repräsentation eines Reifenparameterwerts als Eingangswerte.

Es versteht sich, dass die Erfindung nicht hierauf beschränkt ist und dass das Bestimmen, ob der erste Reifensensor einer Radposition des Nutzfahrzeugs zuordenbar ist, auch auf andere Art und Weise erfolgen kann.

Dass das Bestimmen zumindest teilweise basierend auf dem zumindest einen Empfangsparameterwert des ersten drahtlosen Kommunikationssignals und/oder der zumindest einen in dem ersten drahtlosen Kommunikationssignal enthaltene Repräsentation eines Reifenparameterwerts erfolgt, soll beispielsweise derart verstanden werden, dass bei dem Bestimmen zumindest der Empfangsparameterwert oder die Repräsentation eines Reifenparameterwerts oder beide berücksichtigt werden.

Es versteht sich, dass bei dem Bestimmen beispielsweise auch mehrere Empfangsparameterwerte eines oder mehrere Empfangsparameter oder mehrere Repräsentationen von Reifenparameterwerten eines oder mehrere Reifenparameter oder beliebige Kombinationen hiervon berücksichtigt werden können. Zum Beispiel kann das Bestimmen zumindest auf allen Empfangsparameterwerten eines oder mehrerer Empfangsparameter und/oder allen Repräsentationen von Reifenparameterwerten, die während eines vorgegebenen Beobachtungszeitraums erfasst und/oder bestimmt werden, basieren.

Unter einem Empfangsparameterwert soll ein Wert eines für den Empfang eines drahtlosen Kommunikationssignals durch die drahtlosen Kommunikationsmittel des Nutzfahrzeugs charakteristischen Parameters (d.h. Empfangsparameters) verstanden werden. Beispiele für einen solchen Empfangsparameter sind eine Empfangshäufigkeit und/oder eine Empfangsfeldstärke und/oder eine Empfangssignalstärke des ersten drahtlosen Kommunikationssignals. Zum Beispiel können die drahtlosen Kommunikationsmittel eingerichtet sein, einen oder mehrere Empfangsparameterwerte eines drahtlosen Kommunikationssignals (z.B. des ersten drahtlosen Kommunikationssignals) zu bestimmen und/oder zu erfassen (z.B. wenn das drahtlose Kommunikationssignal durch die drahtlosen Kommunikationsmittel empfangen wird). Dabei kann das Bestimmen oder Erfassen der Empfangsparameter beispielsweise kontinuierlich oder in regelmäßigen oder unregelmäßigen Zeitabständen beim Empfang des drahtlosen Kommunikationssignals (z.B. des ersten drahtlosen Kommunikationssignals) erfolgen.

Dies ist beispielsweise vorteilhaft, da ein drahtloser Kommunikationsweg zwischen dem ersten Reifensensor und den Kommunikationsmitteln für jede Radposition des Nutzfahrzeugs verschiedene Übertragungsparameter aufweisen kann, so dass die Empfangsparameterwerte des ersten drahtlosen Kommunikationssignals von der Radposition abhängig sind und somit eine Zuordnung des ersten Reifensensors zu einer Radposition des Nutzfahrzeugs ermöglichen. Zum Beispiel ist die Dämpfung des ersten drahtlosen Kommunikationssignals entlang des drahtlosen Kommunikationswegs zwischen dem ersten Reifensensor und den Kommunikationsmitteln für jede Radposition verschieden. Die verschiedenen Übertragungsparameter können sich beispielsweise aufgrund von konstruktionsbedingten Hindernissen (z.B. aufgrund des Rahmens des Nutzfahrzeugs oder anderer Konstruktionsteile des Nutzfahrzeugs) und/oder der Position und/oder der Ausrichtung der Kommunikationsmittel ergeben.

Unter einem Reifenparameterwert soll ein Wert eines für den Zustand des Reifens charakteristischer Parameter (d.h. Reifenparameters) verstanden werden. Beispiele für einen solchen Reifenparameter sind eine Temperatur (z.B. eine Reifentemperatur) und/oder ein Druck (z.B. ein Reifendruck). Auch ein Reifenparameterwert kann abhängig von der Radposition sein und somit eine Zuordnung des ersten Reifensensors zu einer Radposition des Nutzfahrzeugs ermöglichen. Zum Beispiel können sich verschiedene Reifentemperaturwerte für einen Reifen ohne Fahrbahnkontakt (z.B. einen Reifen eines Rads an einer angehobenen Liftachse des Nutzfahrzeugs) ergeben im Vergleich zu einem Reifen mit Fahrbahnkontakt. Eine Repräsentation eines solchen Reifenparameterwerts kann beispielsweise, wie oben beschrieben, in Form eines Nutzsignals (z.B. eines digitalen oder analogen Nutzsignals), das den Reifenparameterwert repräsentiert, in dem ersten drahtlosen Kommunikationssignal enthalten sein.

Das Bestimmen, ob der erste Reifensensor einer Radposition des Nutzfahrzeugs zuordenbar ist, kann somit unabhängig von einer (z.B. gespeicherten und/oder zuvor bestimmten) Zuordnung zwischen dem ersten Reifensensor und/oder einer Kennung des ersten Reifensensors und einer Radposition des Nutzfahrzeugs erfolgen.

Dies ist beispielsweise vorteilhaft, wenn die Radpositionen der Räder des Nutzfahrzeugs getauscht werden oder wenn neue Räder an dem Nutzfahrzeug montiert werden. Denn in so einem Fall ist es erfindungsgemäß nicht mehr notwendig, eine Zuordnung zwischen den Reifensensoren und/oder einer Kennung der Reifensensoren und einer Radposition des Nutzfahrzeugs beispielsweise durch eine manuelle Eingabe herzustellen und/oder in einem Speicher zu speichern (z.B. in einem Speicher der erfindungsgemäßen Vorrichtung).

In beispielhaften Ausführungsformen der Erfindung basiert das Bestimmen, ob der erste Reifensensor einer Radposition des Nutzfahrzeugs zuordenbar ist, nur auf einem oder mehreren Empfangsparameterwerten des ersten drahtlosen Kommunikationssignals (z.B. dem zumindest einen Empfangsparameterwert des ersten drahtlosen Kommunikationssignals) und/oder auf einer oder mehreren in den ersten drahtlosen Kommunikationssignal enthaltener Repräsentationen von Reifenparameterwerten (z.B. der zumindest einen in dem ersten drahtlosen Kommunikationssignal enthaltenen Repräsentationen eines Reifenparameterwerts).

In beispielhaften Ausführungsformen der Erfindung umfasst das Verfahren ferner:
- wenn das Bestimmen ergibt, dass der erste Reifensensor einer Radposition des Nutzfahrzeugs zuordenbar ist, Zuordnen des ersten Reifensensors zu der Radposition des Nutzfahrzeugs. Dabei soll unter der Radposition des Nutzfahrzeugs beispielsweise die dem ersten Reifensensor zuordenbare Radposition verstanden werden.

Das Zuordnen des ersten Reifensensors zu der Radposition des Nutzfahrzeugs kann beispielsweise dadurch erfolgen, dass die zumindest eine in dem ersten drahtlosen Kommunikationssignal enthaltene Repräsentation eines Reifenparameterwerts und/oder eine in dem ersten drahtlosen Kommunikationssignal enthaltene Repräsentation einer Kennung des ersten Reifensensors dieser Radposition des Nutzfahrzeugs zugeordnet wird (z.B. durch einen Eintrag in einer Datenstruktur wie einer Tabelle und/oder einem Array, die beispielsweise in einem Speicher der erfindungsgemäßen Vorrichtung gespeichert ist).

Alternativ oder zusätzlich kann das Zuordnen des ersten Reifensensors zu der Radposition des Nutzfahrzeugs auch dadurch erfolgen, dass die zumindest eine in dem ersten drahtlosen Kommunikationssignal enthaltene Repräsentation eines Reifenparameterwerts als Repräsentation eines Reifenparameterwerts eines Reifens an dieser Radposition des Nutzfahrzeugs verarbeitet (z.B. ausgewertet) und/oder ausgegeben (z.B. durch ein Ausgabemittel wie einen Bildschirm der erfindungsgemäßen Vorrichtung) und/oder eine entsprechend Ausgabe (z.B. durch ein Ausgabemittel wie einen Bildschirm einer Benutzervorrichtung) bewirkt wird.

Die Zuordnung des ersten Reifensensors zu der Radposition des Nutzfahrzeugs wird beispielsweise bis zum Erfassen eines vorgegebenen Ereignisses (z.B. das Unterschreiten einer vorgegebenen Geschwindigkeit und/oder das Anhalten des Nutzfahrzeugs und/oder das Abkoppeln des Nutzfahrzeugs, falls das Nutzfahrzeug ein Anhänger oder ein Sattelauflieger ist, von einem Zugfahrzeug) und/oder für einen vorgegebenen Zeitraum (z.B. einen vorgegebene Zeitraum seit dem Zuordnen des ersten Reifensensors zu der Radposition des Nutzfahrzeugs) beibehalten.

In beispielhaften Ausführungsformen der Erfindung umfasst das Verfahren ferner:
- Bestimmen und/oder Erfassen einer Geschwindigkeit und/oder Bewegung des Nutzfahrzeugs.

Dabei soll unter einer Geschwindigkeit beispielsweise eine (quantitative) Geschwindigkeitsinformation wie ein Geschwindigkeitswert verstanden werden, und unter einer Bewegung soll beispielsweise eine (qualitative) Information verstanden werden, ob sich das Nutzfahrzeug bewegt oder in Ruhe ist.

Das Erfassen einer Geschwindigkeit und/oder einer Bewegung kann beispielsweise durch einen Geschwindigkeitssensor erfolgen (z.B. einen Geschwindigkeitssensor der erfindungsgemäßen Vorrichtung).

Alternativ oder zusätzlich kann eine Geschwindigkeit und/oder eine Bewegung des Nutzfahrzeugs beispielsweise basierend auf Positionsinformationen und/oder Beschleunigungsinformationen bestimmt werden. Die Beschleunigungsinformationen repräsentieren beispielsweise ein Beschleunigungsprofil (z.B. mehrere aufeinanderfolgende Beschleunigungswerte und für jeden Beschleunigungswert den jeweiligen Erfassungszeitpunkt) des Nutzfahrzeugs. Die Positionsinformationen repräsentieren beispielsweise mehrere hintereinander erfasste Positionen des Nutzfahrzeugs sowie für jede erfasste Position den jeweiligen Erfassungszeitpunkt.

Zum Beispiel umfasst die erfindungsgemäße Vorrichtung einen Beschleunigungssensor eingerichtet zum Erfassen der Beschleunigung der erfindungsgemäßen Vorrichtung und/oder einen Positionssensor (z.B. einen GPS-Sensor) eingerichtet zum Erfassen der Position der erfindungsgemäßen Vorrichtung.

Wenn die erfindungsgemäße Vorrichtung Teil des Nutzfahrzeugs ist, entspricht die Beschleunigung und/oder die Position der erfindungsgemäßen Vorrichtung der Beschleunigung und/oder der Position des Nutzfahrzeugs. Es versteht sich allerdings, dass ein solcher Positionssensor und/oder ein solcher Beschleunigungssensor auch separat von der erfindungsgemäßen Vorrichtung sein kann, beispielsweise kann ein Positionssensor und/oder ein Beschleunigungssensor auch Teil des Reifensensors sein.

Gemäß der Erfindung basiert das Bestimmen, ob der erste Reifensensor einer Radposition des Nutzfahrzeugs zuordenbar ist, ferner zumindest teilweise auf einer Geschwindigkeit und/oder einer Bewegung des Nutzfahrzeugs. Dabei ist der erste Reifensensor nur dann einer Radposition des Nutzfahrzeugs zuordenbar, wenn die Geschwindigkeit (z.B. eine zuletzt erfasste und/oder bestimmte Geschwindigkeit) des Nutzfahrzeugs größer als oder gleich einer vorgegebenen Geschwindigkeit (z.B. 5 km/h, 10 km/h oder 15 km/h) ist und/oder wenn sich das Nutzfahrzeug in Bewegung befindet (z.B. wenn eine zuletzt erfasste und/oder bestimmte Bewegung
des Nutzfahrzeugs anzeigt, dass sich das Nutzfahrzeug bewegt).

Es kann beispielsweise vorgesehen sein, dass der erste Reifensensor nur dann das erste drahtlose Kommunikationssignal aussendet, wenn ein Bewegungssensor des Reifensensors (z.B. ein Geschwindigkeitssensor und/oder ein Beschleunigungssensor) eine Bewegung erfasst.

Alternativ oder zusätzlich erfolgt das Bestimmen, ob der erste Reifensensor einer Radposition des Nutzfahrzeugs zuordenbar ist, nur dann wenn die Geschwindigkeit des Nutzfahrzeugs größer als oder gleich einer vorgegebenen Geschwindigkeit ist und/oder wenn sich das Nutzfahrzeug in Bewegung befindet. Zum Beispiel sind die drahtlosen Kommunikationsmittel inaktiv, wenn die Geschwindigkeit des Nutzfahrzeugs kleiner als die vorgegebene Geschwindigkeit ist und/oder wenn sich das Nutzfahrzeug in Ruhe befindet. Ferner ist auch denkbar, dass das erste drahtlose Kommunikationssignal ignoriert (z.B. verworfen wird), wenn die Geschwindigkeit des Nutzfahrzeugs kleiner als die vorgegebene Geschwindigkeit ist und/oder wenn sich das Nutzfahrzeug in Ruhe befindet.

Diese Ausführungsformen sind beispielsweise vorteilhaft, um Verwechslungen mit Reifensensoren anderer Nutzfahrzeuge zu vermeiden, wenn das Nutzfahrzeug in der Nähe der anderen Nutzfahrzeuge abgestellt ist.

In beispielhaften Ausführungsformen der Erfindung repräsentiert der zumindest eine Empfangsparameterwert des ersten drahtlosen Kommunikationssignals eine Empfangshäufigkeit und/oder eine Empfangsfeldstärke und/oder eine Empfangssignalstärke des ersten drahtlosen Kommunikationssignals. Zum Beispiel ist der zumindest eine Empfangsparameterwert des ersten drahtlosen Kommunikationssignals ein Wert einer Empfangshäufigkeit und/oder einer Empfangsfeldstärke und/oder einer Empfangssignalstärke des ersten drahtlosen Kommunikationssignals.

Wie oben offenbart, ist der Reifensensor beispielsweise eingerichtet zum Erfassen zumindest eines Reifenparameterwerts eines Reifenparameters und zum Aussenden des ersten drahtlosen Kommunikationssignals in regelmäßigen oder unregelmäßigen Zeitabständen mit einer Repräsentation des jeweils zuletzt erfassten zumindest einen Reifenparameterwerts. Unter einer Empfangshäufigkeit kann dementsprechend beispielsweise die Häufigkeit oder die Häufigkeitsverteilung verstanden werden, mit der das erste drahtlose Kommunikationssignal durch die drahtlosen Kommunikationsmittel empfangen wird (z.B. in einem bestimmten Zeitraum wie einem vorgegebenen Beobachtungszeitraum empfangen wird). Zum Beispiel entspricht die Empfangshäufigkeit der Anzahl der Repräsentationen eines Reifenparameterwerts, die in dem durch die drahtlosen Kommunikationsmittel (z.B. in einem bestimmten Zeitraum wie einem vorgegebenen Beobachtungszeitraum) empfangenen drahtlosen Kommunikationssignal enthalten ist. Zum Beispiel wird die Empfangshäufigkeit jeweils um eins erhöht, wenn das drahtlose Kommunikationssignal mit einer Repräsentation eines Reifenparameterwerts empfangen wird. Dabei soll unter dem Empfangen des ersten drahtlosen Kommunikationssignals beispielsweise verstanden werden, dass das erste drahtlose Kommunikationssignal derart empfangen wird, dass die Repräsentation des Reifenparameterwerts (z.B. in Form eines Nutzsignals) aus dem empfangenen drahtlosen Kommunikationssignal erhalten werden kann (z.B. durch ein Demodulationsverfahren).

Die Empfangshäufigkeit kann beispielsweise charakteristisch für den drahtlosen Kommunikationsweg zwischen dem ersten Reifensensor und den drahtlosen Kommunikationsmitteln und somit für eine Radposition des Nutzfahrzeugs sein. Zum Beispiel kann das erste drahtlose Kommunikationssignal nur dann durch die drahtlosen Kommunikationsmittel empfangen werden, wenn sich der Reifensensor aufgrund der Drehung des Reifens beim Aussenden des drahtlosen Kommunikationssignals in einem bestimmten Bereich befindet, wobei der Bereich für jede Radposition des Nutzfahrzeugs verschieden sein kann (z.B. verschieden groß sein kann), so dass sich für jede Radposition des Nutzfahrzeugs jeweils eine andere Empfangshäufigkeit des ersten drahtlosen Kommunikationssignals ergibt (z.B. wenn das erste drahtlose Kommunikationssignal von dem Reifensensor jeweils mit den gleichen regelmäßigen oder unregelmäßigen Zeitabständen ausgesendet wird).

Die Empfangsfeldstärke und/oder die Empfangssignalstärke entsprechen beispielsweise der durch die drahtlosen Kommunikationsmittel erfassbaren und/oder erfassten Feldstärke und/oder Signalstärke des ersten drahtlosen Kommunikationssignals. Zum Beispiel sind die drahtlosen Kommunikationsmittel eingerichtet zum Erfassen der Feldstärke und/oder Signalstärke des ersten drahtlosen Kommunikationssignals während des Empfangs des ersten drahtlosen Kommunikationssignals. Auch die Empfangsfeldstärke und/oder die Empfangssignalstärke kann beispielsweise charakteristisch für den drahtlosen Kommunikationsweg zwischen dem ersten Reifensensor und den drahtlosen Kommunikationsmitteln und somit für eine Radposition des Nutzfahrzeugs sein. Zum Beispiel weist der drahtlose Kommunikationsweg für jede Radposition des Nutzfahrzeugs eine andere Dämpfung auf, so dass sich für jede Radposition des Nutzfahrzeugs jeweils eine andere Empfangsfeldstärke und/oder Empfangssignalstärke des ersten drahtlosen Kommunikationssignals ergibt (z.B. wenn das erste drahtlose Kommunikationssignal von dem Reifensensor jeweils mit der gleichen Sendeleistung ausgesendet wird).

In beispielhaften Ausführungsformen der Erfindung repräsentiert der zumindest eine Reifenparameterwert eine Temperatur (z.B. ein Reifentemperatur) und/oder einen Druck (z.B. ein Reifendruck). Zum Beispiel ist der zumindest eine Reifenparameterwert ein Temperaturwert (z.B. ein Reifentemperatur) und/oder ein Druckwert (z.B. ein Reifendruckwert).

In beispielhaften Ausführungsformen der Erfindung ist in dem ersten drahtlosen Kommunikationssignal ferner einer Repräsentation einer Kennung des ersten Reifensensors enthalten. Dabei soll unter der Kennung beispielsweise eine Information verstanden werden, anhand der der erste Reifensensor identifizierbar ist, wie zum Beispiel eine Nummer (z.B. eine Seriennummer), eine Bezeichnung (z.B. ein Name), eine Adresse (z.B. eine Geräteadresse und/oder eine Hardware-Adresse wie eine Medium Access Control-Adresse) oder eine Kombination hiervon.

In beispielhaften Ausführungsformen der Erfindung ist der erste Reifensensor ein Reifensensor des Nutzfahrzeugs. Dabei soll unter einem Reifensensor des Nutzfahrzeugs beispielsweise ein Reifensensor verstanden werden, der an und/oder in einem Reifen des Nutzfahrzeugs angeordnet ist.

In beispielhaften Ausführungsformen der Erfindung basiert das Bestimmen, ob der erste Reifensensor einer Radposition des Nutzfahrzeugs zuordenbar ist, zumindest teilweise auf mehreren Empfangsparameterwerten eines Empfangsparameters des ersten drahtlosen Kommunikationssignals und/oder mehreren in dem ersten drahtlosen Kommunikationssignal enthaltene Repräsentationen eines Reifenparameterwerts eines Reifenparameters. Zum Beispiel werden die mehreren Empfangsparameterwerte durch das kontinuierliche oder in regelmäßigen oder unregelmäßigen Zeitabständen stattfinden Erfassen und/oder Bestimmen eines Empfangsparameterwerts des Empfangsparameters beim Empfang des ersten drahtlosen Kommunikationssignals erhalten. Die mehreren Repräsentationen eines Reifenparameterwerts entsprechen beispielsweise den in dem empfangenen ersten drahtlosen Kommunikationssignal enthaltenen Repräsentationen eines Reifenparameterwerts eines Reifenparameters. Wie oben beschrieben, wird das erste drahtlose Kommunikationssignal durch den ersten Reifensensor beispielsweise in regelmäßigen oder unregelmäßigen Zeitabständen jeweils mit einer Repräsentation des zuletzt erfassten Reifenparameterwerts ausgesendet.

In beispielhaften Ausführungsformen der Erfindung wird das erfindungsgemäße Verfahren ferner zumindest mit einem zweiten drahtlosen Kommunikationssignal eines zweiten Reifensensors durchgeführt. Zum Beispiel wird das erfindungsgemäße Verfahren neben dem zweiten drahtlosen Kommunikationssignal eines zweiten Reifensensors noch mit einem oder mehreren weiteren drahtlosen Kommunikationssignalen eines oder mehrerer weiterer Reifensensoren durchgeführt.

Dabei sind das erste Kommunikationssignal und das zweite drahtlose Kommunikationssignal (und z.B. die weiteren drahtlosen Kommunikationssignale) jeweils voneinander verschieden, und der erste Reifensensor und der zweite Reifensensor (und z.B. die weiteren Reifensensoren) sind ebenfalls voneinander verschieden.

Zum Beispiel ist der zweite Reifensensor (und z.B. die weiteren Reifensensoren) ein Reifensensor des Nutzfahrzeugs, der an und/oder in einem anderen Reifen des Nutzfahrzeugs als der erste Reifensensor angeordnet ist. Vorzugsweise haben der erste Reifensensor und der zweite Reifensensor (und z.B. die weiteren Reifensensoren) zumindest die gleiche Sendekonfiguration, um beispielsweise sicherzustellen, dass das erste und das zweite drahtlose Kommunikationssignal (und z.B. die weiteren drahtlosen Kommunikationssignale) mit vergleichbaren (z.B. zumindest im Wesentlichen gleichen) Parametern, wie vergleichbaren (z.B. zumindest im Wesentlichen gleichen) Zeitabständen und/oder vergleichbaren (z.B. zumindest im Wesentlichen gleichen) Sendeleistungen, durch den jeweiligen Reifensensor ausgesendet werden. Dementsprechend soll die Offenbarung für den ersten Reifensensor und das erste drahtlose Kommunikationssignal analog auch für den zweiten Reifensensor und das zweite drahtlose Kommunikationssignal (und z.B. die weiteren Reifensensoren und die weiteren drahtlosen Kommunikationssignale) gelten.

In beispielhaften Ausführungsformen der Erfindung umfasst das Verfahren ferner:
- Bereithalten und/oder Bestimmen von zumindest einem erwarteten Empfangsparameterwert und/oder zumindest einem erwarteten Reifenparameterwert für jede Radposition des Nutzfahrzeugs.

Dementsprechend werden zumindest so viele erwartete Empfangsparameterwerte und/oder erwartete Reifenparameterwerte bereitgehalten und/oder bestimmt wie das Nutzfahrzeug Radpositionen aufweist.

Dabei soll unter einem erwarteten Empfangsparameterwert für eine jeweilige Radposition des Nutzfahrzeugs beispielsweise ein Empfangsparameterwert eines Empfangsparameters verstanden werden, der für ein drahtloses Kommunikationssignal, das von einem Reifensensor, der an und/oder in einem Reifen eines an dieser Radposition befindlichen Rads des Nutzfahrzeugs angeordnet ist, ausgesendet wird, für diesen Empfangsparameter erwartet wird. Unter einem erwarteten Reifenparameterwert für eine jeweilige Radposition des Nutzfahrzeugs soll zum Beispiel ein Reifenparameterwert eines Reifenparameters verstanden werden, der für einen Reifen eines an dieser Radposition befindlichen Rads des Nutzfahrzeugs für diesen Reifenparameter erwartet wird.

Zum Beispiel basiert das Bestimmen, ob der erste Reifensensor einer Radposition des Nutzfahrzeugs zuordenbar ist, ferner zumindest teilweise auf den erwarteten Empfangsparameterwerten und/oder den erwarteten Reifenparameterwerten. Das Bestimmen kann beispielsweise einen Vergleich mit den erwarteten Empfangsparameterwerten und/oder den erwarteten Reifenparameterwerten umfassen.

Zum Beispiel wird der zumindest eine Empfangsparameterwert des ersten drahtlosen Kommunikationssignals mit den erwarteten Empfangsparameterwerten verglichen, und/oder die zumindest eine in dem ersten drahtlosen Kommunikationssignal enthaltene Repräsentation eines Reifenparameterwerts wird mit dem erwarteten Reifenparameterwerten verglichen. Wenn das Bestimmen zumindest teilweise auf mehreren Empfangsparameterwerten eines Empfangsparameters des ersten drahtlosen Kommunikationssignals basiert, wird zum Beispiel ein Mittelwert und/oder ein Median dieser Empfangsparameterwerte des ersten drahtlosen Kommunikationssignals mit den für diesen Empfangsparameter erwarteten Empfangsparameterwerten verglichen; und wenn das Bestimmen zumindest teilweise auf mehreren in dem ersten drahtlosen Kommunikationssignal enthaltenen Repräsentationen von Reifenparameterwerten eines Reifenparameters basiert, wird beispielsweise ein Mittelwert und/oder ein Median dieser Repräsentationen mit den für diesen Reifenparameter erwarteten Reifenparameterwerten verglichen.

Als Ergebnis des Vergleichs kann zum Beispiel eine Information über Abweichungen von den erwarteten Empfangsparameterwerten und/oder den erwarteten Reifenparameterwerten erhalten werden. Zum Beispiel wird bestimmt, dass der erste Reifensensor der Radposition des Nutzfahrzeugs zuordenbar ist, für deren erwarteten Empfangsparameterwert und/oder deren erwarteten Reifenparameterwert sich bei dem Vergleich die geringste Abweichung ergibt.

Die erwarteten Empfangsparameterwerte und/oder die erwarteten Reifenparameterwerte können beispielsweise durch eine oder mehrere Simulationen und/oder durch eine oder mehrere Tests bestimmt werden. Zum Beispiel entspricht der für eine jeweilige Radposition des Nutzfahrzeugs erwartete Empfangsparameterwert und/oder Reifenparameterwert dem Mittelwert oder dem Median der im Rahmen einer oder mehrere Simulationen und/oder Tests für diese Radposition erhaltenen Empfangsparameterwerte und/oder Reifenparameterwerte. Zum Beispiel können diese erwarteten Empfangsparameterwerte und/oder erwarteten Reifenparameterwerte für alle Nutzfahrzeug des gleichen Nutzfahrzeugtyps verwendet werden. Dies ist beispielsweise vorteilhaft, um die erwarteten Empfangsparameterwerte und/oder die erwarteten Reifenparameterwerte nicht für jedes Nutzfahrzeug einzeln bestimmen zu müssen.

Unter dem Bereithalten der erwarteten Empfangsparameterwerte und/oder der erwarteten Reifenparameterwerte soll beispielsweise verstanden werden, dass diese in einem Speicher der erfindungsgemäßen Vorrichtung gespeichert sind. Zum Beispiel werden die erwarteten Empfangsparameterwerte und/oder die erwarteten Reifenparameterwerte bei der Herstellung der erfindungsgemäßen Vorrichtung in dem Speicher gespeichert. Es versteht sich, dass die erwarteten Empfangsparameterwerte und/oder die erwarteten Reifenparameterwerte aber auch nach der Herstellung der erfindungsgemäßen Vorrichtung in dem Speicher gespeichert und/oder geändert werden können.

Alternativ oder zusätzlich können die erwarteten Empfangsparameterwerte und/oder die erwarteten Reifenparameterwerte zum Beispiel auch während des erfindungsgemäßen Verfahrens und/oder durch die erfindungsgemäße Vorrichtung bestimmt werden (z.B. während oder nach einem Kalibrierungszeitraums).

Zum Beispiel umfasst das Verfahren ferner:
- Empfangen einer Mehrzahl von drahtlosen Kommunikationssignalen verschiedener Reifensensoren des Nutzfahrzeugs durch die drahtlosen Kommunikationsmittel des Nutzfahrzeugs.

Der erste Reifensensor ist beispielsweise einer der Reifensensoren des Nutzfahrzeugs.

Dabei werden die Mehrzahl von drahtlosen Kommunikationssignalen verschiedener Reifensensoren des Nutzfahrzeugs beispielsweise während eines Kalibrierungszeitraums empfangen, wobei eine Zuordnung der verschiedenen Reifensensoren zu den Radpositionen des Nutzfahrzeugs für den Kalibrierungszeitraum vorgegeben ist. Die Zuordnung kann beispielsweise durch eine Benutzereingabe (z.B. an einem Eingabemittel wie einer Benutzerschnittstelle der erfindungsgemäßen Vorrichtung und/oder einer mit der erfindungsgemäßen Vorrichtung kommunikativ verbundenen Benutzervorrichtung) vorgegeben werden.

Zum Beispiel wird die Zuordnung der Reifensensoren der auf die Räder des Nutzfahrzeugs montierten Reifen bei der Erstmontage im Rahmen der Herstellung des Nutzfahrzeugs vorgegeben (z.B. in einem Speicher der erfindungsgemäßen Vorrichtung für den Kalibrierungszeitraum gespeichert), so dass sich der Kalibrierungszeitraum beispielsweise an die Herstellung des Nutzfahrzeugs anschließt. Es versteht sich, dass der Kalibrierungszeitraum sich auch an ein anderes Ereignis anschließen kann, bei dem eine Zuordnung der verschiedenen Reifensensoren zu den Radpositionen des Nutzfahrzeugs vorgegeben wird. Beispiele für solche Ereignisse können beispielsweise ein Werkstattaufenthalt und/oder eine Inspektion des Nutzfahrzeugs sein.

Der Kalibrierungszeitraum startet beispielsweise, wenn eine solche Zuordnung vorgegeben wird. Alternativ kann vorgesehen sein, dass der Kalibrierungszeitraum durch eine Benutzereingabe (z.B. an einem Eingabemittel wie einer Benutzerschnittstelle der erfindungsgemäßen Vorrichtung und/oder einer mit der erfindungsgemäßen Vorrichtung kommunikativ verbundenen Benutzervorrichtung) gestartet wird.

Beispielsweise endet der Kalibrierungszeitraum, wenn das Nutzfahrzeug nach Start des Kalibrierungszeitraums mehr als eine vorgegebene Fahrzeit wie beispielsweise 1 h, 2 h, 4 h, 8 h oder 24 h gefahren ist. Alternativ oder zusätzlich kann auch ein fester Zeitraum wie beispielsweise 12 h, 1 d, 2 d oder 7 d als Kalibrierungszeitraum vorgegeben sein.

Die erwarteten Empfangsparameterwerte können beispielsweise zumindest teilweise basierend auf Empfangsparameterwerten der Mehrzahl von drahtlosen Kommunikationssignalen, die während des Kalibrierungszeitraums empfangen wurden, bestimmt werden. Zum Beispiel wird ein für eine Radposition erwarteter Empfangsparameterwert derart bestimmt, dass er dem Mittelwert und/oder dem Median der Empfangsparameterwerte des von dem Reifensensor, der dieser Radposition für den Kalibrierungszeitraum zugeordnet ist, während des Kalibrierungszeitraums empfangenen drahtlosen Kommunikationssignals entspricht.

Alternativ oder zusätzlich können die erwarteten Reifenparameterwerte zum Beispiel zumindest teilweise basierend auf in der Mehrzahl von drahtlosen Kommunikationssignalen enthaltenen Repräsentationen von Reifenparameterwerten bestimmt werden. Zum Beispiel wird ein für eine Radposition erwarteter Reifenparameterwert derart bestimmt, dass er dem Mittelwert und/oder dem Median der Repräsentationen von Reifenparameterwerten entspricht, die in dem während des Kalibrierungszeitraums empfangenen drahtlosen Kommunikationssignal von dem Reifensensor, der dieser Radposition für den Kalibrierungszeitraum zugeordnet ist, enthalten sind.

Die durch das Bestimmen während oder nach dem Kalibrierungszeitraum erhaltenen erwarteten Empfangsparameterwerte und/oder erwarteten Reifenparameterwerte können beispielsweise in einem Speicher (z.B. einem Speicher der erfindungsgemäßen Vorrichtung) gespeichert werden.

Das Bestimmen der erwarteten Empfangsparameter und/oder der erwarteten Reifenparameterwerte kann ferner zumindest teilweise auf einer Geschwindigkeit und/oder Bewegung des Nutzfahrzeugs basieren.

Wie oben offenbart, kann beispielsweise vorgesehen sein, dass der erste Reifensensor und die anderen Reifensensoren des Nutzfahrzeugs nur dann das erste drahtlose Kommunikationssignal aussenden, wenn ein Bewegungssensor des jeweiligen Reifensensors (z.B. ein Geschwindigkeitssensor und/oder ein Beschleunigungssensor) eine Bewegung erfasst.

Alternativ oder zusätzlich erfolgt das Bestimmen der erwarteten Empfangsparameter und/oder der erwarteten Reifenparameterwerte nur dann, wenn die Geschwindigkeit des Nutzfahrzeugs größer als oder gleich einer vorgegebenen Geschwindigkeit ist und/oder wenn sich das Nutzfahrzeug in Bewegung befindet. Zum Beispiel sind die drahtlosen Kommunikationsmittel inaktiv, wenn die Geschwindigkeit des Nutzfahrzeugs kleiner als die vorgegebene Geschwindigkeit ist und/oder wenn sich das Nutzfahrzeug in Ruhe befindet. Ferner ist auch denkbar, dass die drahtlosen Kommunikationssignale der Reifensensoren des Nutzfahrzeugs ignoriert werden (z.B. verworfen werden), wenn die Geschwindigkeit des Nutzfahrzeugs kleiner als die vorgegebene Geschwindigkeit ist und/oder wenn sich das Nutzfahrzeug in Ruhe befindet.

Das Bestimmen während oder nach einem Kalibrierungszeitraum ist beispielsweise vorteilhaft, um bauliche Besonderheiten und/oder Eigenheiten des Nutzfahrzeugs berücksichtigen zu können. Allerdings ist es auch mit einem erhöhten Aufwand gegenüber der oben beschriebenen Möglichkeit verbunden, bei der die erwarteten Empfangsparameterwerte und/oder die erwarteten Reifenparameterwerte durch eine oder mehrere Simulationen und/oder durch eine oder mehrere Tests bestimmt werden.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung verstanden werden.

Es zeigen:
- Fig. 1: eine schematische Darstellung einer beispielhaften Ausführungsform einer erfindungsgemäßen Vorrichtung;
- Fig. 2a: eine schematische Darstellung einer beispielhaften Ausführungsform eines erfindungsgemäßen Nutzfahrzeugs;
- Fig. 2b: einen Ausschnitt einer beispielhaften Konstruktionszeichnung eines Teils eines erfindungsgemäßen Nutzfahrzeugs;
- Fig. 3: ein Flussdiagramm einer beispielhaften Ausführungsform eines erfindungsgemäßen Verfahrens;
- Fig. 4: ein Flussdiagram einer weiteren beispielhaften Ausführungsform eines erfindungsgemäßen Verfahrens.

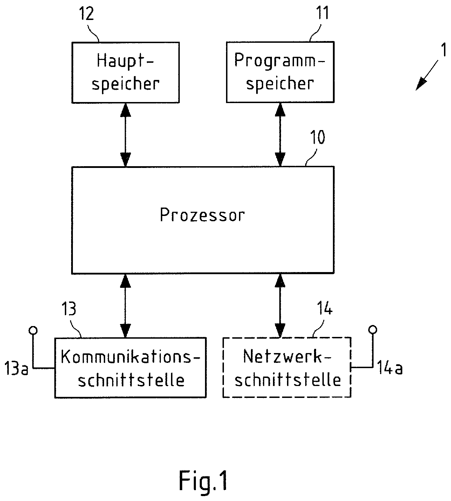

Fig. 1 ist eine schematische Darstellung einer beispielhaften Ausführungsform einer erfindungsgemäßen Vorrichtung. Die erfindungsgemäße Vorrichtung ist in Fig. 1 als Telematikeinheit 1 für ein Nutzfahrzeug dargestellt.

Die erfindungsgemäße Vorrichtung umfasst beispielhaft einen Prozessor 10 und verbunden mit dem Prozessor 10 einen ersten Speicher als Programm- und Datenspeicher 11, einen zweiten Speicher als Hauptspeicher 12 sowie eine erste drahtlose Kommunikationsschnittstelle 13 mit einer Antenne 13a.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Telematikeinheit 1 auch mehrere Prozessoren 10 umfassen kann.

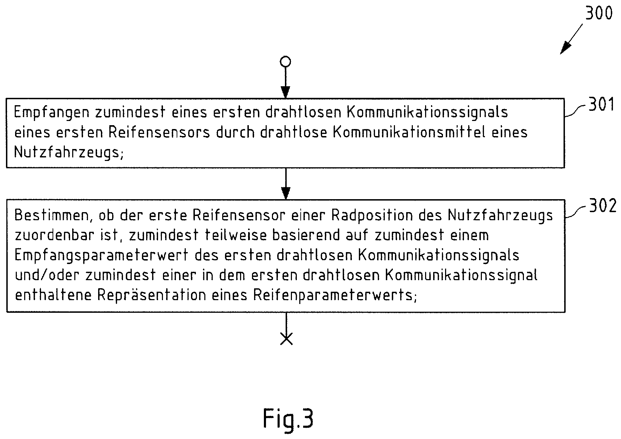

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines erfindungsgemäßen Computerprogramms, das Programmanweisungen umfasst, die den Prozessor 10 veranlassen, das erfindungsgemäße Verfahren gemäß (z.B. das Verfahren gemäß dem in Fig. 3a und/oder 3b dargestellten Flussdiagram 300a und/oder 300b) auszuführen und/oder zu steuern, wenn der Prozessor 10 diese in Programmspeicher 11 gespeicherten Programmanweisungen ausführt.

Programmspeicher 11 enthält ferner beispielsweise das Betriebssystem der Telematikeinheit, das beim Starten der Telematikeinheit zumindest teilweise in Hauptspeicher 12 geladen und vom Prozessor 10 ausgeführt wird. Insbesondere wird beim Starten der Telematikeinheit zumindest ein Teil des Kerns des Betriebssystems in den Hauptspeicher 12 geladen und von Prozessor 10 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Telematikeinheit zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 11 auch Teil des Prozessors 10 sein.

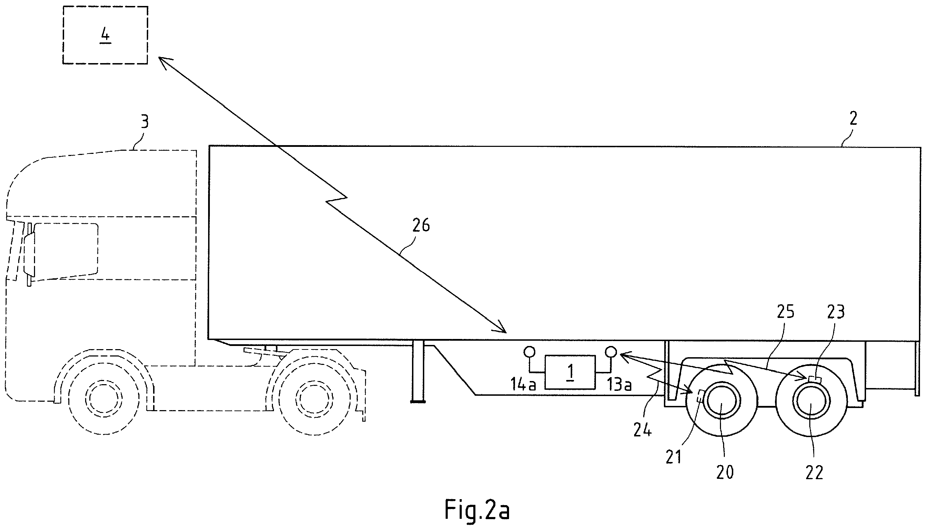

Prozessor 10 steuert die drahtlose Kommunikationsschnittstelle 13. Neben Antenne 13a weist die drahtlose Kommunikationsschnittstelle zumindest eine Empfangsschaltung auf. Teil einer Empfangsschaltung sind beispielsweise ein oder mehrere Mischer, ein oder mehrere Verstärker und/oder ein oder mehrere Demodulatoren. Die Empfangsschaltung ist beispielsweise Teil einer Sende-Empfangsschaltung. Zum Beispiel ist die drahtlose Kommunikationsschnittstelle 13 eingerichtet zum Empfangen eines drahtlosen Kommunikationssignals eines Reifensensors (z.B. der in Fig. 2a dargestellten Reifensensoren 21 und 23) und zum Erhalten (z.B. zum Extrahieren) eines digitalen Nutzsignals aus dem empfangenen drahtlosen Kommunikationssignal (z.B. durch einen Demodulator). Ferner ist die drahtlose Kommunikationsschnittstelle 13 zum Beispiel eingerichtet, einen oder mehrere Empfangsparameterwerte eines drahtlosen Kommunikationssignals zu bestimmen und/oder zu erfassen (z.B. wenn das drahtlose Kommunikationssignal durch die drahtlose Kommunikationsschnittstelle 13 empfangen wird). Das Bestimmen oder Erfassen der Empfangsparameter kann beispielsweise kontinuierlich oder in regelmäßigen Zeitabständen beim Empfang des drahtlosen Kommunikationssignals erfolgen. Dabei soll unter einem Empfangsparameterwert beispielsweise ein Wert eines für den Empfang eines drahtlosen Kommunikationssignals durch die drahtlose Kommunikationsschnittstelle 13 charakteristischen Parameters (d.h. Empfangsparameters) verstanden werden. Beispiele für einen solchen Empfangsparameter sind eine Empfangshäufigkeit und/oder eine Empfangsfeldstärke und/oder eine Empfangssignalstärke des drahtlosen Kommunikationssignals.

Ferner steuert Prozessor 10 die optionale drahtlose Netzwerkschnittstelle 14 mit einer Antenne 14a, welche beispielsweise als GSM-, UMTS- und/oder LTE-Schnittstelle ausgebildet ist. Sie ist beispielsweise eingerichtet zur Kommunikation mit einem Server (z.B. dem in Fig. 2a dargestellten Server 4 eines Telematikdienstes) über ein drahtloses Kommunikationsnetzwerk (z.B. ein GSM-, UMTS- und/oder LTE-Netzwerk).

Eine drahtlose Netzwerkschnittstelle kann beispielsweise Informationen (über eine Verbindung in einem drahtlosen Kommunikationsnetzwerk) empfangen und an den Prozessor weiterleiten (z.B. in Form eines digitalen Nutzsignals) und/oder Informationen von dem Prozessor empfangen (z.B. in Form eines digitalen Nutzsignals) und (über eine Verbindung in einem drahtlosen Kommunikationsnetzwerk) senden. Ein Beispiel für eine drahtlose Netzwerkschnittstelle ist ein drahtloser Kommunikationsnetzwerkadapter.

Die Komponenten 10 bis 14 der Telematikeinheit 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Telematikeinheit neben den Komponenten 10 bis 14 weitere Komponenten wie zum Beispiel Ein- und Ausgabemittel und/oder einen Geschwindigkeitssensor zum Erfassen einer Geschwindigkeit oder Bewegung der Telematikeinheit und/oder des Nutzfahrzeugs und/oder einen Positionssensor zum Erfassen einer Position der Telematikeinheit und/oder des Nutzfahrzeugs umfassen kann.

Fig. 2a ist eine schematische Darstellung einer beispielhaften Ausführungsform eines erfindungsgemäßen Nutzfahrzeugs in Form eines Sattelaufliegers 2.

Der Sattelauflieger 2 umfasst unter anderem die Telematikeinheit 1 aus Fig. 1, ein Rad 20 mit einem ersten Reifensensor 21 und ein Rad 22 mit einem optionalen zweiten Reifensensor 23. Es versteht sich, dass der Sattelauflieger weitere Räder mit weiteren Reifensensoren umfassen kann. Vorzugsweise weist jedes Rad des Nutzfahrzeugs einen Reifensensor auf.

Dabei entspricht die Montageposition des jeweiligen Rads auch einer Radposition des Sattelaufliegers 4. Die Reifensensoren 21 und 23 sind beispielsweise im Inneren eines Reifens des jeweiligen Rads des Nutzfahrzeugs angeordnet und beispielsweise eingerichtet, zumindest einen Reifendruckwert des Reifens, in dem sie angeordnet sind, zu erfassen (z.B. kontinuierlich oder in regelmäßigen Zeitabständen zu erfassen). Zum Beispiel umfassen die Reifensensoren 21 und 23 einen Drucksensor zum Erfassen eines Reifendruckwerts. Ferner sind die Reifensensoren 21 und 23 beispielsweise eingerichtet, ein drahtloses Kommunikationssignal (z.B. in regelmäßigen Zeitabständen) mit einer Repräsentation des jeweils zuletzt durch den jeweiligen Reifensensor erfassten Reifendruckwerts auszusenden. Ferner kann das ausgesendete drahtlose Kommunikationssignal der Reifensensoren 21 und 23 eine Repräsentation einer Kennung des jeweiligen Reifensensors enthalten.

Dabei soll unter der Kennung beispielsweise eine Information verstanden werden, anhand der der jeweilige Reifensensor identifizierbar ist, wie zum Beispiel eine Nummer (z.B. eine Seriennummer), eine Bezeichnung (z.B. ein Name), eine Adresse (z.B. eine Geräteadresse und/oder eine Hardware-Adresse wie eine Medium Access Control-Adresse) oder eine Kombination hiervon.

Die Repräsentation des jeweils zuletzt durch den jeweiligen Reifensensor erfassten Reifendruckwerts und/oder die Kennung des Reifensensors kann, wie oben beschrieben, zum Beispiel durch ein in dem drahtlosen Kommunikationssignal enthaltenes Nutzsignal oder einen Teil eines darin enthaltenen Nutzsignals erfolgen, wobei das Nutzsignal oder der Teil des Nutzsignals den jeweils zuletzt durch den jeweiligen Reifensensor erfassten Reifendruckwert und/oder die Kennung des Reifensensors repräsentiert. Zum Beispiel umfassen die Reifensensoren Kommunikationsmittel zum Aussenden eines drahtlosen Kommunikationssignals wie eine Sendeschaltung und/oder eine Antenne. Teil einer Sendeschaltung sind beispielsweise ein oder mehrere Mischer, ein oder mehrere Verstärker und/oder ein oder mehrere Modulatoren. Die Sendeschaltung ist beispielsweise Teil einer Sende-Empfangsschaltung.

Die Reifensensoren 21 und 23 haben zumindest die gleiche Sendekonfiguration, um beispielsweise sicherzustellen, dass die von den Reifensensoren 21 und 23 ausgesendeten drahtlosen Kommunikationssignale mit vergleichbaren (z.B. zumindest im Wesentlichen gleichen) Parametern, wie vergleichbaren (z.B. zumindest im Wesentlichen gleichen) Zeitabständen und/oder vergleichbaren (z.B. zumindest im Wesentlichen gleichen) Sendeleistungen, ausgesendet werden. Zum Beispiel sind die Reifensensoren 21 und 23 vom gleichen Reifensensortyp.

Wie oben beschrieben, ist die drahtlose Kommunikationsschnittelle 13 mit der Antenne 13a der Telematikeinheit 1 eingerichtet, ein drahtloses Kommunikationssignal der Reifensensoren 21 und 23 zu empfangen. Dies ist in Fig. 2a beispielhaft durch den drahtlosen Kommunikationsweg 24 zwischen dem ersten Reifensensor 21 und der Telematikeinheit 1 sowie den drahtlosen Kommunikationsweg 25 zwischen dem zweiten Reifensensor 23 und der Telematikeinheit 1 angedeutet.

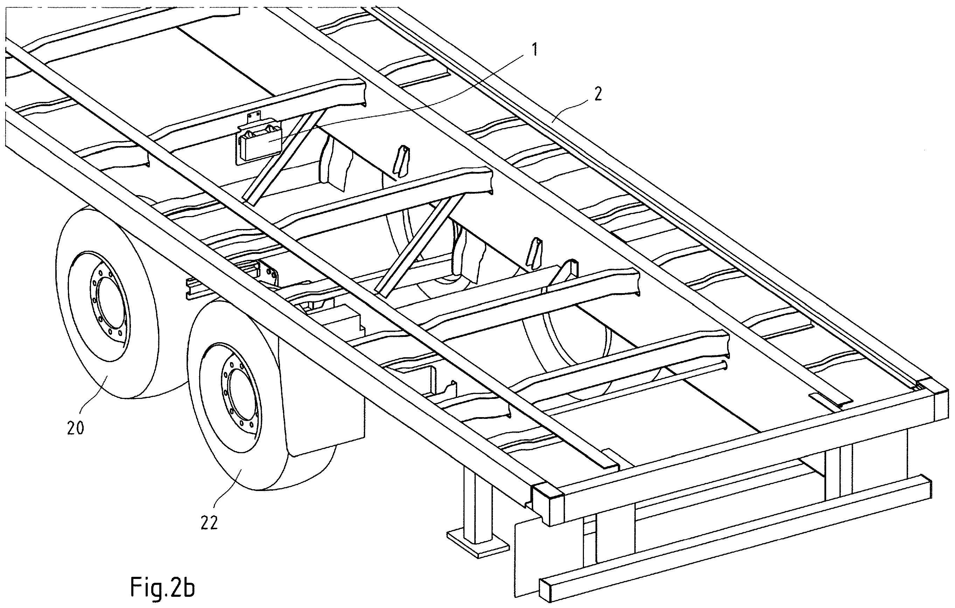

Dabei ist bereits aus der Darstellung in Fig. 2a ersichtlich, dass sich für die drahtlosen Kommunikationswege 24 und 25 beispielsweise aufgrund von konstruktionsbedingten Hindernissen (z.B. aufgrund des Rahmens des Nutzfahrzeugs oder anderer Konstruktionsteile des Nutzfahrzeugs) verschiedene Übertragungsparameter ergeben, so dass die von den Reifensensoren 21 und 23 ausgesendeten drahtlosen Kommunikationssignale mit verschiedenen Empfangsparameterwerten durch die Kommunikationsschnittstelle 13 der Telematikeinheit 1 empfangen werden. Dies wird auch noch einmal durch den Ausschnitt einer beispielhaften Konstruktionszeichnung gemäß Fig. 2b verdeutlicht, in der die Einbauposition der Telematikeinheit 1 am Rahmen des Sattelaufliegers 2 in Bezug zu den Rädern 20 und 22 beispielhaft dargestellt ist. Aus der Einbausituation der Telematikeinheit 1 und der jeweiligen Radposition ergibt sich in dem ohnehin stark gedämpften Funk-Feld für jede Radposition des Sattelaufliegers 2 eine eigene Empfangscharakteristik.

Die Zugmaschine des Sattelaufliegers 2 ist in Fig. 2a beispielhaft dargestellt und mit dem Bezugszeichen 3 versehen.

Ferner ist in Fig. 2a beispielhaft ein Server 4 dargestellt. Der Server 4 ist ein Server eines Telematikdienstes und ist beispielsweise eingerichtet zum Bereitstellen einer Benutzeroberfläche für Benutzer des Telematikdienstes. Zum Beispiel kann ein Benutzer des Telematikdienstes mit einer Benutzervorrichtung über das Internet auf die Benutzeroberfläche zugreifen und Zustandsinformationen seiner Nutzfahrzeuge, die mit entsprechenden Telematikeinheiten (z.B. der Telematikeinheit 1) ausgestattet sind, abrufen und/oder die Telematikeinheiten seiner Nutzfahrzeuge konfigurieren (z.B. Reifensensoren für einen Kalibrierungszeitraum Radpositionen zuordnen). Zu diesem Zweck ist in Fig. 2a eine drahtlose Netzwerkverbindung 26 zwischen der Telematikeinheit 1 und dem Server 4 dargestellt. Über die Netzwerkverbindung 26 kann die Telematikeinheit 1 erfasste Zustandsinformationen des Sattelaufliegers 4 wie beispielsweise Reifendruckinformationen der Reifen der Räder 20 und 22 an den Server 4 senden. Die drahtlose Netzwerkverbindung 26 ist beispielsweise eine Verbindung über ein drahtloses Kommunikationsnetzwerk wie ein GSM-, UMTS- und/oder LTE-Netzwerk. Es versteht sich, dass die Netzwerkverbindung 26 nicht ausschließlich drahtlos sein muss, sondern beispielsweise eine oder mehrere drahtlose Abschnitte (z.B. zwischen der Telematikeinheit 1 und einer Basisstation eines drahtlosen Kommunikationsnetzwerks) und eine oder mehrere drahtgebundene Abschnitte (z.B. zwischen der Basisstation und dem Server 4) umfassen kann.

Fig. 3 zeigt ein Flussdiagramm 300 mit Schritten einer beispielhaften Ausführungsform eines erfindungsgemäßen Verfahrens.

In einem Schritt 301 wird zumindest ein erstes drahtloses Kommunikationssignal eines ersten Reifensensors durch drahtlose Kommunikationsmittel eines Nutzfahrzeugs empfangen.

Zum Beispiel kann es sich bei dem Nutzfahrzeug um den Sattelauflieger 2 (vgl. Fig. 2a), bei dem ersten drahtlosen Kommunikationssignal um ein durch den ersten Reifensensor 21 des Sattelaufliegers 2 ausgesendetes drahtloses Kommunikationssignal und bei den Kommunikationsmitteln des Nutzfahrzeugs um die drahtlose Kommunikationsschnittstelle 13 der Telematikeinheit 1 handeln. Wie oben beschrieben, ist die drahtlose Kommunikationsschnittstelle 13 beispielsweise eingerichtet zum Empfangen eines drahtlosen Kommunikationssignals eines Reifensensors (z.B. des Reifensensors 21) und zum Erhalten (z.B. zum Extrahieren) eines digitalen Nutzsignals aus dem empfangenen drahtlosen Kommunikationssignal (z.B. durch einen Demodulator).

In einem Schritt 302 wird zumindest teilweise basierend auf zumindest einem Empfangsparameterwert des ersten drahtlosen Kommunikationssignals und/oder zumindest einer in dem ersten drahtlosen Kommunikationssignal enthaltene Repräsentation eines Reifenparameterwerts bestimmt, ob der erste Reifensensor einer Radposition des Nutzfahrzeugs zuordenbar ist.

Zum Beispiel ist der zumindest eine Empfangsparameterwert ein beim Empfang des drahtlosen Kommunikationssignals durch die drahtlosen Kommunikationsmittel erfasster und/oder bestimmter Empfangsparameterwert. Zum Beispiel kann die drahtlose Kommunikationsschnittstelle 13 eingerichtet sein, einen oder mehrere Empfangsparameterwerte eines drahtlosen Kommunikationssignals des Reifensensor 21 zu bestimmen und/oder zu erfassen, wenn das drahtlose Kommunikationssignal des Reifensensors 21 durch die drahtlose Kommunikationsschnittstelle 13 empfangen wird. Dabei soll, wie oben beschrieben, unter einem Empfangsparameterwert beispielsweise eine Empfangshäufigkeit und/oder eine Empfangsfeldstärke und/oder eine Empfangssignalstärke des drahtlosen Kommunikationssignals verstanden werden.

Unter einem Reifenparameterwert soll ein Wert eines für den Zustand eines Reifens charakteristischer Parameter (d.h. Reifenparameters) verstanden werden. Beispiele für einen solchen Reifenparameter sind eine Temperatur (z.B. eine Reifentemperatur) und/oder ein Druck (z.B. ein Reifendruck). Eine Repräsentation eines solchen Reifenparameterwerts kann beispielsweise in Form eines Nutzsignals oder eines Teils eines Nutzsignals in dem ersten drahtlosen Kommunikationssignal enthalten sein, wobei das Nutzsignal oder der Teil des Nutzsignals den Reifenparameterwert repräsentiert. Zum Beispiel ist der Reifensensor 21 eingerichtet, ein drahtloses Kommunikationssignal (z.B. in regelmäßigen Zeitabständen) mit einer Repräsentation des jeweils zuletzt durch den Reifensensor 21 erfassten Reifendruckwerts auszusenden.

Das Bestimmen in Schritt 302 erfolgt beispielsweise gemäß vorgegebenen Regeln und/oder einem vorgegebenen Algorithmus. Eine Repräsentation der Regeln und/oder des Algorithmus kann beispielsweise in einem Speicher (z.B. Programmspeicher 11) der Telematikeinheit 1 gespeichert sein, zum Beispiel in Form von Programmanweisungen eines Computerprogramms.

Zum Beispiel ergibt das Bestimmen, dass der erste Reifensensor einer Radposition des Nutzfahrzeugs zuordenbar ist, falls die vorgegebenen Regeln und/oder der vorgegebene Algorithmus den ersten Reifensensor einer Radposition des Nutzfahrzeugs zuordnen. Andernfalls ergibt das Bestimmen beispielsweise, dass der erste Reifensensor keiner Radposition des Nutzfahrzeugs zuordenbar ist.

Dass das Bestimmen in Schritt 302 zumindest teilweise basierend auf dem zumindest einen Empfangsparameterwert des ersten drahtlosen Kommunikationssignals und/oder der zumindest einen in dem ersten drahtlosen Kommunikationssignal enthaltene Repräsentation eines Reifenparameterwerts erfolgt, soll beispielsweise derart verstanden werden, dass bei dem Bestimmen zumindest der Empfangsparameterwert oder die Repräsentation eines Reifenparameterwerts oder beide berücksichtigt werden. Es versteht sich, dass bei dem Bestimmen beispielsweise auch mehrere Empfangsparameterwerte oder mehrere Repräsentationen von Reifenparameterwerten oder beliebige Kombinationen hiervon berücksichtigt werden können.

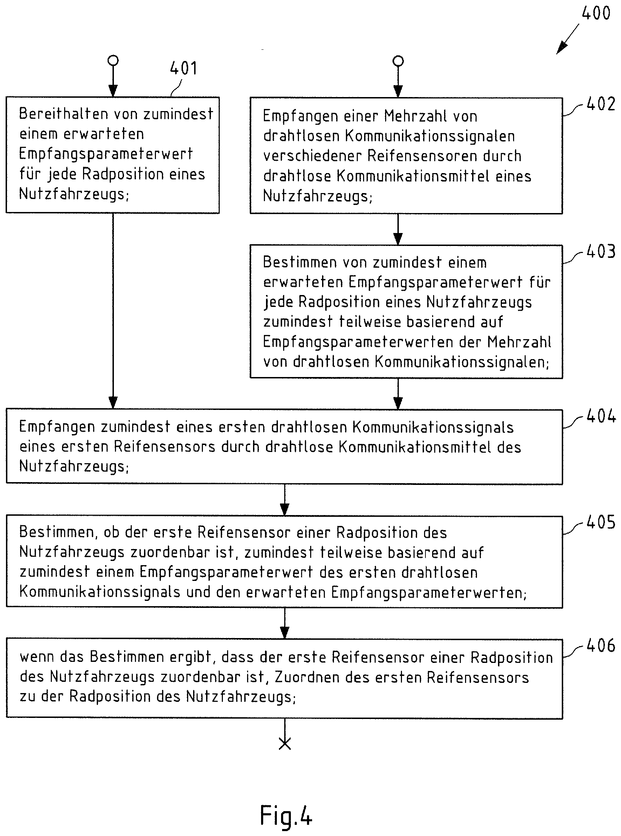

Fig. 4 zeigt ein Flussdiagramm 400 mit Schritten einer weiteren beispielhaften Ausführungsform eines erfindungsgemäßen Verfahrens. Im Folgenden wird beispielhaft angenommen, dass die Schritte 401 bis 406 des Flussdiagramms 400 durch die Telematikeinheit 1, die Teil des Sattelaufliegers 2 (vgl. Fig. 2a) ist, ausgeführt werden.

In einem Schritt 401 wird für jede Radposition des Sattelaufliegers 2 zumindest ein erwarteter Empfangsparameterwert durch die Telematikeinheit 1 bereitgehalten. Zum Beispiel sind die erwarteten Empfangsparameterwerte in einem Speicher (z.B. in Programmspeicher 11) der Telematikeinheit 1 gespeichert.

Dabei soll unter einem erwarteten Empfangsparameterwert für eine jeweilige Radposition des Sattelaufliegers 2 beispielsweise ein Empfangsparameterwert eines Empfangsparameters verstanden werden, der für ein drahtloses Kommunikationssignal, das von einem Reifensensor, der an und/oder in einem Reifen eines an dieser Radposition befindlichen Rads des Nutzfahrzeugs angeordnet ist, ausgesendet wird, für diesen Empfangsparameter erwartet wird.

Die erwarteten Empfangsparameterwerte können beispielsweise durch eine oder mehrere Simulationen und/oder durch eine oder mehrere Tests bestimmt werden. Zum Beispiel entspricht der für einen Empfangsparameter für eine jeweilige Radposition des Sattelaufliegers durch die Telematikeinheit 2 bereitgehaltene erwartete Empfangsparameterwert dem Mittelwert oder dem Median der im Rahmen einer oder mehrere Simulationen und/oder Tests für diese Radposition erhaltenen Empfangsparameterwerte des Empfangsparameters. Zum Beispiel werden diese erwarteten Empfangsparameterwerte für alle Sattelauflieger vom Typ des Sattelaufliegers 2 verwendet und jeweils in einem Speicher der Telematikeinheit des jeweiligen Sattelaufliegers (z.B. bei der Herstellung des Sattelaufliegers) gespeichert.

Alternativ oder zusätzlich können die erwarteten Empfangsparameterwerte auch durch die Telematikeinheit 2 bestimmt werden. Dies wird im Folgenden anhand der Schritte 402 und 403 beispielhaft erläutert.

In einem Schritt 402 wird eine Mehrzahl von drahtlosen Kommunikationssignalen verschiedener Reifensensoren durch drahtlose Kommunikationsmittel eines Nutzfahrzeugs empfangen. Dabei handelt es sich bei den drahtlosen Kommunikationsmitteln um die drahtlose Kommunikationsschnittstelle 13 und bei den Reifensensoren um die Reifensensoren der Reifen der Räder des Sattelaufliegers 2. Zum Beispiel werden in Schritt 402 unter anderem drahtlose Kommunikationssignale der Reifensensoren 21 und 23 durch die drahtlose Kommunikationsschnittstelle 13 empfangen.

Dabei werden die Mehrzahl von drahtlosen Kommunikationssignalen verschiedener Reifensensoren des Sattelaufliegers 2 in Schritt 402 beispielsweise während eines Kalibrierungszeitraums empfangen, wobei eine Zuordnung der verschiedenen Reifensensoren zu den Radpositionen des Sattelaufliegers für den Kalibrierungszeitraum vorgegeben ist. Die Zuordnung kann beispielsweise durch eine Benutzereingabe (z.B. an einem Eingabemittel wie einer Benutzerschnittstelle der Telematikeinheit 1 und/oder einer mit der Telematikeinheit 1 kommunikativ über den Server 4 verbundenen Benutzervorrichtung) vorgegeben werden.

Zum Beispiel wird die Zuordnung der Reifensensoren der auf die Räder des Sattelaufliegers 2 montierten Reifen bei der Erstmontage im Rahmen der Herstellung des Sattelaufliegers 2 vorgegeben und beispielsweise in einem Speicher (z.B. Programmspeicher 11) der Telematikeinheit 1 für den Kalibrierungszeitraum gespeichert.

Zum Beispiel wird in dem Speicher der Telematikeinheit 1 eine Zuordnung zwischen der Kennung des jeweiligen Reifensensors und der jeweiligen Radposition des Sattelaufliegers 2 gespeichert. Wie oben beschrieben, können die drahtlosen Kommunikationssignale der Reifensensoren 21 und 23 eine Repräsentation der Kennung des jeweiligen Reifensensors enthalten, so dass eine Unterscheidung der drahtlosen Kommunikationssignale und für den Kalibrierungszeitraum eine Zuordnung der Reifensensoren anhand der in den Kommunikationssignalen enthaltenen Repräsentationen der Kennung des jeweiligen Reifensensors zu einer Radposition möglich ist.

Der Kalibrierungszeitraum startet beispielsweise, wenn eine Zuordnung vorgegeben wird. Alternativ kann vorgesehen sein, dass der Kalibrierungszeitraum durch eine Benutzereingabe (z.B. an einem Eingabemittel wie einer Benutzerschnittstelle der Telematikeinheit 1 und/oder einer mit der Telematikeinheit 1 kommunikativ über den Server 4 verbundenen Benutzervorrichtung) gestartet wird.

Beispielsweise endet der Kalibrierungszeitraum, wenn das Nutzfahrzeug nach Start des Kalibrierungszeitraums mehr als eine vorgegebene Fahrzeit wie beispielsweise 1 h, 2 h, 4 h, 8 h oder 24 h gefahren ist. Alternativ oder zusätzlich kann auch ein fester Zeitraum wie beispielsweise 12 h, 1 d, 2 d oder 7 d als Kalibrierungszeitraum vorgegeben sein.

In einem Schritt 403 wird für jede Radposition des Nutzfahrzeugs (d.h. des Sattelaufliegers 2) zumindest teilweise basierend auf Empfangsparameterwerten der Mehrzahl von drahtlosen Kommunikationssignalen zumindest ein erwarteter Empfangsparameterwert für diesen Empfangsparameter bestimmt.

Zum Beispiel wird ein für eine Radposition erwarteter Empfangsparameterwert eines Empfangsparameters derart bestimmt, dass er dem Mittelwert und/oder dem Median der Empfangsparameterwerte dieses Empfangsparameters des von dem Reifensensor, der dieser Radposition für den Kalibrierungszeitraum zugeordnet ist, während des Kalibrierungszeitraums empfangenen drahtlosen Kommunikationssignals entspricht.

Ferner können in Schritt 403 beispielsweise auch bereits durch die Telematikeinheit 1 bereitgehaltene (z.B. in einem Speicher der Telematikeinheit gespeicherte) Empfangsparameterwerte berücksichtigt werden.

Die in Schritt 403 bestimmten erwarteten Empfangsparameterwerte werden beispielsweise in einem Speicher (z.B. Programmspeicher 11) der Telematikeinheit 1 gespeichert.

Das Bestimmen während oder nach einem Kalibrierungszeitraum ist beispielsweise vorteilhaft, um bauliche Besonderheiten und/oder Eigenheiten des Sattelaufliegers 2 berücksichtigen zu können. Allerdings ist es auch mit einem erhöhten Aufwand gegenüber der oben beschriebenen Möglichkeit verbunden, bei der die erwarteten Empfangsparameterwerte durch eine oder mehrere Simulationen und/oder durch einen oder mehrere Tests für alle Sattelauflieger vom Typ des Sattelaufliegers 2 bestimmt werden.

In einem Schritt 404 wird zumindest ein drahtloses Kommunikationssignal eines ersten Reifensensors durch drahtlose Kommunikationsmittel des Nutzfahrzeugs empfangen. Schritt 404 korrespondiert zu Schritt 301 (vgl. Fig. 3). Dabei entspricht der erste Reifensensor dem Reifensensor 21 des Sattelaufliegers 2 und die drahtlosen Kommunikationsmittel der drahtlosen Kommunikationsschnittstelle 13 der Telematikeinheit 2.

In einem Schritt 405 wird zumindest teilweise basierend auf zumindest einem Empfangsparameterwert des ersten drahtlosen Kommunikationssignals und den erwarteten Empfangsparameterwerten bestimmt, ob der erste Reifensensor einer Radposition des Nutzfahrzeugs zuordenbar ist. Schritt 405 korrespondiert zu Schritt 302 (vgl. Fig. 3).

Das Bestimmen kann beispielsweise einen Vergleich des zumindest einen Empfangsparameterwert des ersten drahtlosen Kommunikationssignals des Reifensensors 21 mit den erwarteten Empfangsparameterwerten (d.h. den in Schritt 401 bereitgehaltenen und/oder den in Schritt 403 bestimmten erwarteten Empfangsparameterwerten) umfassen.

Es versteht sich, dass das Bestimmen in Schritt 405 beispielsweise auch auf mehreren Empfangsparameterwerten eines Empfangsparameters des ersten drahtlosen Kommunikationssignals basieren kann, die (z.B. kontinuierlich oder mit regelmäßigen oder unregelmäßigen Zeitabständen) beim Empfang des ersten drahtlosen Kommunikationssignals (z.B. während eines vorgegebenen Beobachtungszeitraums) erfasst und/oder bestimmt werden. In diesem Fall wird zum Beispiel ein Mittelwert und/oder ein Median dieser Empfangsparameterwerte des ersten drahtlosen Kommunikationssignals mit den für diesen Empfangsparameter erwarteten Empfangsparameterwerten verglichen. Dies ist beispielsweise vorteilhaft, um zu vermeiden, dass das Bestimmen in Schritt 405 durch Ausreißer oder fehlerhaft erfasste Empfangsparameterwerte verfälscht wird.

Als Ergebnis des Vergleichs kann zum Beispiel eine Information über Abweichungen von den erwarteten Empfangsparameterwerten erhalten werden. Zum Beispiel wird bestimmt, dass der erste Reifensensor 21 der Radposition des Sattelaufliegers 2 zuordenbar ist, für deren erwarteten Empfangsparameterwert sich bei dem Vergleich die geringste Abweichung ergibt.

Ferner kann das Bestimmen in Schritt 405 zumindest teilweise auf einer Geschwindigkeit und/oder einer Bewegung des Sattelaufliegers 2 basieren. Dies ist beispielsweise vorteilhaft, um Verwechslungen mit Reifensensoren anderer Nutzfahrzeuge zu vermeiden, wenn das Nutzfahrzeug in der Nähe der anderen Nutzfahrzeuge abgestellt ist. Zum Beispiel erfolgt das Bestimmen, ob der erste Reifensensor einer Radposition des Nutzfahrzeugs zuordenbar ist, nur dann wenn die Geschwindigkeit des Sattelaufliegers 2 größer als oder gleich einer vorgegebenen Geschwindigkeit (z.B. 5 km/h, 10 km/h oder 15 km/h) ist und/oder wenn sich der Sattelauflieger in Bewegung befindet. Zum Beispiel ist die drahtlose Kommunikationsschnittstelle 13 inaktiv, wenn die Geschwindigkeit des Sattelaufliegers 2 kleiner als die vorgegebene Geschwindigkeit ist und/oder wenn sich der Sattelauflieger 2 in Ruhe befindet. Ferner ist auch denkbar, dass drahtlose Kommunikationssignale von Reifensensoren ignoriert (z.B. verworfen) werden, wenn die Geschwindigkeit des Sattelaufliegers 2 kleiner als die vorgegebene Geschwindigkeit ist und/oder wenn sich der Sattelauflieger 2 in Ruhe befindet. Wie oben beschrieben, kann die Telematikeinheit beispielsweise einen Geschwindigkeitssensor zum Erfassen einer Geschwindigkeit und/oder einer Bewegung des Sattelaufliegers 2 umfassen.

In einem Schritt 406 wird, wenn das Bestimmen ergibt, dass der erste Reifensensor einer Radposition des Nutzfahrzeugs zuordenbar ist, der erste Reifensensor dieser Radposition des Nutzfahrzeugs zugeordnet. Zum Beispiel wird der Reifensensor 21 in Schritt 406 der Radposition des Rads 20 des Sattelaufliegers 20 zugeordnet, so dass die in dem empfangenen ersten drahtlosen Kommunikationssignal enthaltenen Repräsentation(en) eines Reifenparameterwerts als Reifenzustandsinformationen des Reifens an dieser Radposition interpretiert und beispielsweise an den Server 4 kommuniziert werden. Dabei erfolgt die Zuordnung in Schritt 406 beispielsweise nur für einen begrenzten Zeitraum, beispielsweise nur solange sich das Nutzfahrzeug in Bewegung befindet.

Die Schritte 405 bis 406 können beispielsweise für ein drahtloses Kommunikationssignal des zweiten Reifensensors 23 oder eines weiteren Reifensensors wiederholt werden, um auch diesen Reifensensor einer Radposition des Sattelaufliegers 2 zuzuordnen.

Die im Zusammenhang mit Fig. 3 und Fig. 4 beschriebenen Ausführungsformen sind nur als beispielhaft zu verstehen. Die Erfindung ist nicht auf diese Ausführungsformen beschränkt.

Ein Beispiel eines Empfangsparameters ist, wie oben beschrieben beispielsweise eine Empfangshäufigkeit des ersten drahtlosen Kommunikationssignals, die beispielsweise eine Häufigkeitsverteilung der in dem ersten drahtlosen Kommunikationssignal enthaltenen Repräsentationen eines Reifenparameterwerts (z.B. während eines vorgegebene Beobachtungszeitraums) beschreibt. Daneben können auch noch weitere physikalische Größen, wie etwa die Feldstärke als weiteren Empfangsparameter oder die Temperatur als Reifenparameter ausgewertet und beim Bestimmen, ob der Reifensensor einer Radposition zuordenbar ist, berücksichtigt werden.

Da sich, wie oben anhand von Fig. 2b erläutert, aus der Einbauposition der Telematikeinheit 1 und der Radposition in einem ohnehin stark gedämpften Funk-Feld je Rad eine eigene Empfangscharakteristik ergibt, können dadurch insbesondere nach einer längeren Fahrt die Empfangsparameterwerte und/oder die Reifenparameterwerte in Beziehung zur Radposition gebracht werden.

Die Temperatur kann ebenfalls einen Hinweis auf die Reifenposition geben, da bei vorhandener Liftachse die Reifen unterschiedlich belastet und aufgeheizt werden, abhängig davon, welche Reifen Bodenkontakt haben.

Aus all diesen Eingangswerten kann mit Hilfe mathematischer Verfahren, wie zum Beispiel der Mittelwertbildung, auf die Radposition des Reifensensors geschlossen werden.

Dabei kann sich das System selbst kalibrieren, indem die berechneten und/oder bestimmten Kenngrößen der Reifensensoren mit den von der Telematikeinheit bereitgehaltenen erwarteten Empfangsparameterwerten und/oder Reifenparameterwerten abgeglichen werden.

Des Weiteren wäre es möglich die erwarteten Empfangsparameterwerte und/oder Reifenparameterwerte schon bei der Inbetriebnahme abhängig vom Nutzfahrzeugtyp vorzugeben.

## Patentansprüche

1. Verfahren, umfassend:
- Bestimmen (403) von zumindest einem erwarteten Empfangsparameterwert und/oder zumindest einem erwarteten Reifenparameterwert für jede Radposition des Nutzfahrzeugs,
- Empfangen (301, 404) zumindest eines ersten drahtlosen Kommunikationssignals eines ersten Reifensensors (21, 23) durch drahtlose Kommunikationsmittel (13) eines Nutzfahrzeugs (2);
- Bestimmen (302, 405), ob der erste Reifensensor (21, 23) einer Radposition des Nutzfahrzeugs (2) zuordenbar ist, zumindest teilweise basierend auf zumindest einem Empfangsparameterwert des ersten drahtlosen Kommunikationssignals und/oder zumindest einer in dem ersten drahtlosen Kommunikationssignal enthaltene Repräsentation eines Reifenparameterwerts;
- wobei das Bestimmen (302, 405), ob der erste Reifensensor (21, 23) einer Radposition des Nutzfahrzeugs (2) zuordenbar ist, ferner zumindest teilweise auf einer Geschwindigkeit des Nutzfahrzeugs (2) basiert, und wobei der erste Reifensensor (21, 23) nur dann einer Radposition des Nutzfahrzeugs (2) zuordenbar ist, wenn die Geschwindigkeit des Nutzfahrzeugs (2) größer als oder gleich einer vorgegebenen Geschwindigkeit ist,
- wobei das Bestimmen (405), ob der erste Reifensensor (21, 23) einer Radposition des Nutzfahrzeugs (2) zuordenbar ist, ferner zumindest teilweise auf den erwarteten Empfangsparameterwerten und/oder den erwarteten Reifenparameterwerten basiert, und
- wobei das Bestimmen der erwarteten Empfangsparameter und/oder der erwarteten Reifenparameterwerte ferner zumindest teilweise auf einer Geschwindigkeit des Nutzfahrzeugs (2) basiert.

2. Verfahren nach Anspruch 1, das Verfahren ferner umfassend:
- wenn das Bestimmen ergibt, dass der erste Reifensensor (21, 23) einer Radposition des Nutzfahrzeugs (2) zuordenbar ist, Zuordnen (406) des ersten Reifensensors (21, 23) zu der Radposition des Nutzfahrzeugs (2).

3. Verfahren nach einem der Ansprüche 1 und 2, das Verfahren ferner umfassend:
- Bestimmen und/oder Erfassen einer Geschwindigkeit des Nutzfahrzeugs (2).

4. Verfahren nach einem der Ansprüche 1 bis 3, wobei der zumindest eine Empfangsparameterwert des ersten drahtlosen Kommunikationssignals eine Empfangshäufigkeit und/oder eine Empfangsfeldstärke und/oder eine Empfangssignalstärke des ersten drahtlosen Kommunikationssignals repräsentiert.

5. Verfahren nach einem der Ansprüche 1 bis 4, wobei der zumindest eine Reifenparameterwert eine Temperatur und/oder einen Druck repräsentiert.

6. Verfahren nach einem der Ansprüche 1 bis 5, wobei in dem ersten drahtlosen Kommunikationssignal ferner einer Repräsentation einer Kennung des ersten Reifensensors (21, 23) enthalten ist.

7. Verfahren nach einem der Ansprüche 1 bis 6, das Verfahren ferner umfassend:
- Bereithalten (401) von zumindest einem erwarteten Empfangsparameterwert und/oder zumindest einem erwarteten Reifenparameterwert für jede Radposition des Nutzfahrzeugs.

8. Verfahren nach einem der Ansprüche 1 bis 7, ferner umfassend:
- Empfangen (402) einer Mehrzahl von drahtlosen Kommunikationssignalen verschiedener Reifensensoren (21, 23) durch die drahtlosen Kommunikationsmittel (13) des Nutzfahrzeugs (2).

9. Verfahren nach Anspruch 8, wobei die Mehrzahl von drahtlosen Kommunikationssignalen verschiedener Reifensensoren (21, 23) in einem Kalibrierungszeitraum empfangen werden, wobei eine Zuordnung der verschiedenen Reifensensoren (21, 23) zu den Radpositionen des Nutzfahrzeugs (2) für den Kalibrierungszeitraum vorgegeben ist.

10. Verfahren nach einem der Ansprüche 8 und 9, wobei die erwarteten Empfangsparameterwerte zumindest teilweise basierend auf Empfangsparameterwerten der Mehrzahl von drahtlosen Kommunikationssignalen bestimmt werden, und/oder wobei die erwarteten Reifenparameterwerte zumindest teilweise basierend auf in der Mehrzahl von drahtlosen Kommunikationssignalen enthaltenen Repräsentationen von Reifenparameterwerten bestimmt werden.

11. Vorrichtung, vorzugsweise eine Telematikeinheit (1) für ein Nutzfahrzeug (2), wobei die Vorrichtung eingerichtet ist zur Ausführung und/oder Steuerung des Verfahrens nach einem der Ansprüche 1 bis 11 oder umfassend jeweilige Mittel (10-14) zur Ausführung und/oder Steuerung der Schritte des Verfahrens nach einem der Ansprüche 1 bis 10.

12. Nutzfahrzeug (2), umfassend:
- eine Vorrichtung (1) nach Anspruch 11, und
- einen oder mehrere Reifensensoren (21, 23).

13. Computerprogramm, umfassend Programmanweisungen, die dazu ausgebildet sind, bei Ausführung durch mindestens einen Prozessor eine Vorrichtung zu veranlassen, das Verfahren nach einem der Ansprüche 1 bis 10 auszuführen.

## Claims

1. Method, comprising:
- determining (403) of at least one expected receiving parameter value and/or at least one expected tire parameter value for each wheel position of the commercial vehicle,
- receiving (301, 404) at least a first wireless communication signal of a first tire sensor (21, 23) by wireless communication means (13) of a commercial vehicle (2);
- determining (302, 405) whether the first tire sensor (21, 23) is assignable to a wheel position of the commercial vehicle (2), based at least partially on at least one receiving parameter value of the first wireless communication signal and/or at least one representation of a tire parameter value included in the first wireless communication signal;
- wherein the determining (302, 405) whether the first tire sensor (21, 23) is assignable to a wheel position of the commercial vehicle (2) is further based at least partially on a speed of the commercial vehicle (2), and wherein the first tire sensor (21, 23) is assignable to a wheel position of the commercial vehicle (2) only if the speed of the commercial vehicle (2) is greater than or equal to a predetermined speed,
- wherein the determining (405) whether the first tire sensor (21, 23) is assignable to a wheel position of the commercial vehicle (2) is further based at least partially on the expected receiving parameter values and/or the expected tire parameter values, and
- wherein the determining of the expected receiving parameters and/or the expected tire parameter values is further based at least partially on a speed of the commercial vehicle (2).

2. Method according to claim 1, the method further comprising:
- if determining yields that the first tire sensor (21, 23) is assignable to a wheel position of the commercial vehicle (2), assigning (406) the first tire sensor (21, 23) to the wheel position of the commercial vehicle (2).

3. Method according to any one of claims 1 and 2, the method further comprising:
- determining and/or capturing a speed of the commercial vehicle (2).

4. Method according to any one of claims 1 to 3, wherein the at least one receiving parameter value of the first wireless communication signal represents a receiving rate and/or a receiving field strength and/or a receiving signal strength of the first wireless communication signal.

5. Method according to any one of claims 1 to 4, wherein the at least one tire parameter value represents a temperature and/or a pressure.

6. Method according to any one of claims 1 to 5, wherein the first wireless communication signal further includes a representation of an identifier of the first tire sensor (21, 23).

7. Method according to any one of claims 1 to 6, the method further comprising:
- holding available (401) at least one expected receiving parameter value and/or at least one expected tire parameter value for each wheel position of the commercial vehicle.

8. Method according to any one of claims 1 to 7, further comprising:
- receiving (402) a plurality of wireless communication signals of different tire sensors (21, 23) by the wireless communication means (13) of the commercial vehicle (2).

9. Method according to claim 8, wherein the plurality of wireless communication signals of different tire sensors (21, 23) are received in a calibration time interval, wherein an assignment of the different tire sensors (21, 23) to the wheel positions of the commercial vehicle (2) is predetermined for the calibration time interval.

10. Method according to any one of claims 8 and 9, wherein the expected receiving parameter values are determined at least partially based on receiving parameter values of the plurality of wireless communication signals, and/or wherein the expected tire parameter values are determined at least partially based on representations of tire parameter values included in the plurality of wireless communication signals.

11. Apparatus, preferably a telematics unit (1) for a commercial vehicle (2), wherein the apparatus is configured for performing and/or controlling the method according to any one of claims 1 to 11 or comprising respective means (10-14) for performing and/or controlling the steps of the method according to any one of claims 1 to 10.

12. Commercial vehicle (2), comprising:
- an apparatus (1) according to claim 11, and
- one or multiple tire sensors (21, 23).

13. Computer program comprising program instructions configured, when executed by at least one processor, to cause an apparatus to perform the method according to any one of claims 1 to 10.

## Revendications

1. Méthode comprenant :
- déterminer (403) au moins une valeur de paramètre de réception attendue et/ou au moins une valeur de paramètre de pneu attendue pour chaque position de roue du véhicule utilitaire,
- recevoir (301, 404) au moins un premier signal de communication sans fil d'un premier capteur de pneu (21, 23) par des moyens de communication sans fil (13) d'un véhicule utilitaire (2);
- déterminer (302, 405) si le premier capteur de pneu (21, 23) peut être associé à une position de roue du véhicule utilitaire (2), au moins en partie sur la base d'au moins une valeur de paramètre de réception du premier signal de communication sans fil et/ou d'au moins une représentation d'une valeur de paramètre de pneu contenue dans le premier signal de communication sans fil;
- où déterminer (302, 405) si le premier capteur de pneu (21, 23) peut être associé à une position de roue du véhicule utilitaire (2) repose au moins en partie sur une vitesse du véhicule utilitaire (2), et où le premier capteur de pneu (21, 23) ne peut être associé à une position de roue du véhicule utilitaire (2) que si la vitesse du véhicule utilitaire (2) est supérieure ou égale à une vitesse prédéterminée,
- où déterminer (405) si le premier capteur de pneu (21, 23) peut être associé à une position de roue du véhicule utilitaire (2) repose en outre au moins en partie sur les valeurs de paramètre de réception attendues et/ou les valeurs de paramètre de pneu attendues, et
- où déterminer les paramètres de réception attendus et/ou les valeurs de paramètres de pneu attendues repose en outre au moins en partie sur une vitesse du véhicule utilitaire (2).

2. Méthode selon la revendication 1, la méthode comprenant en outre:
- si la détermination indique que le premier capteur de pneu (21, 23) peut être associé à une position de roue du véhicule utilitaire (2), associer (406) le premier capteur de pneu (21, 23) à la position de roue du véhicule utilitaire (2).

3. Méthode selon l'une quelconque des revendications 1 et 2, la méthode comprenant en outre:
- déterminer et/ou détecter une vitesse du véhicule utilitaire (2).

4. Méthode selon l'une quelconque des revendications 1 à 3, dans laquelle l'au moins une valeur de paramètre de réception du premier signal de communication sans fil représente une fréquence de réception et/ou une intensité de champ de réception et/ou une intensité de signal de réception du premier signal de communication sans fil.

5. Méthode selon l'une quelconque des revendications 1 à 4, dans laquelle l'au moins une valeur de paramètre de pneu représente une température et/ou une pression.

6. Méthode selon l'une quelconque des revendications 1 à 5, dans laquelle le premier signal de communication sans fil comprend en outre une représentation d'un identifiant du premier capteur de pneumatique (21, 23).

7. Méthode selon l'une quelconque des revendications 1 à 6, la méthode comprenant en outre :
- maintenir à disposition (401) au moins une valeur de paramètre de réception attendue et/ou au moins une valeur de paramètre de pneu attendue pour chaque position de roue du véhicule utilitaire.

8. Méthode selon l'une des revendications 1 à 7, comprenant en outre :
- recevoir (402) une pluralité de signaux de communication sans fil de différents capteurs de pneu (21, 23) par les moyens de communication sans fil (13) du véhicule utilitaire (2).

9. Méthode selon la revendication 8, dans laquelle la pluralité de signaux de communication sans fil de différents capteurs de pneu (21, 23) sont reçus dans une période de calibrage, une association des différents capteurs de pneu (21, 23) avec les positions de roue du véhicule utilitaire (2) étant prédéfinie pour la période de calibrage.

10. Méthode selon l'une des revendications 8 et 9, dans laquelle les valeurs de paramètre de réception attendues sont déterminées au moins en partie sur la base de valeurs de paramètre de réception de la pluralité de signaux de communication sans fil, et/ou dans laquelle les valeurs de paramètre de pneu attendues sont déterminées au moins en partie sur la base de représentations de valeurs de paramètre de pneu contenues dans la pluralité de signaux de communication sans fil.

11. Dispositif, de préférence une unité télématique (1) pour un véhicule utilitaire (2), le dispositif étant agencé pour exécuter et/ou commander la méthode selon l'une quelconque des revendications 1 à 11 ou comprenant des moyens respectifs (10-14) pour exécuter et/ou commander les étapes de la méthode selon l'une quelconque des revendications 1 à 10.

12. Véhicule utilitaire (2), comprenant :
- un dispositif [1] selon la revendication 11, et
- un ou plusieurs capteurs de pneu (21, 23).

13. Programme d'ordinateur comprenant des instructions de programme qui, lorsqu'elles sont exécutées par au moins un processeur, sont conçues pour amener un dispositif à exécuter la méthode selon l'une quelconque des revendications 1 à 10.
